# EUROPÄISCHE PATENTSCHRIFT

(11) **EP 1 644 434 B1**
(45) Veröffentlichungstag und Bekanntmachung des Hinweises auf die Patenterteilung: **13.04.2016**
(21) Anmeldenummer: 03817608.7
(22) Anmeldetag: 09.07.2003
(51) Int. Cl.: C08K 5/00, C08L 101/00, C08L 101/02

(54) **VERFAHREN ZUR HERSTELLUNG VON AUS DER SCHMELZE VERFORMBAREN POLYMEREN MIT VERBESSERTEN EIGENSCHAFTEN**
METHOD FOR PRODUCING POLYMERS MOULDABLE FROM MELT AND EXHIBITING ENHANCED PROPERTIES
PROCEDE POUR PRODUIRE DES POLYMERES POUVANT ETRE FACONNES A PARTIR DE LA MATIERE FONDUE ET PRESENTANT DES PROPRIETES AMELIOREES

(30) Priorität: 04.07.2003 DE 10330379
(43) Veröffentlichungstag der Anmeldung: 12.04.2006
(73) Patentinhaber: THÜRINGISCHES INSTITUT FÜR TEXTIL- UND KUNSTSTOFF-FORSCHUNG e.V., 07407 Rudolstadt-Schwarza (DE)
(72) Erfinder: STRUBL, Rüdiger, 07318 Crösten (DE); HEINEMANN, Klaus, 07407 Rudolstadt (DE); GOTTLÖBER, Ralf-Peter, 07422 Bad Blankenburg (DE); NECHWATAL, Axel, 07422 Bad Blankenburg (DE); MEIERKORD, Heinz, 59494 Soest (DE); SCHALLER, Rainer, 86637 Wertingen (DE); MUSCH, Jürgen, 59514 Welver (DE)
(74) Vertreter: Plate, Jürgen
(86) Internationale Anmeldenummer: PCT/DE2003/002297
(87) Internationale Veröffentlichungsnummer: WO 2005/010089

(56) Entgegenhaltungen:
- EP-A- 0 103 106
- EP-A- 0 285 434
- EP-A- 0 837 065
- DE-A- 2 245 335
- JP-A- 8 120 066

## Beschreibung

Die Erfindung betrifft ein Verfahren zur Herstellung von aus der Schmelze verformbaren Polymeren, bei denen durch Einsatz geeigneter Additive und deren Modifizierung erreicht wird, dass sie sich in einer oberflächennahen Schicht der Polymere durch Migration anreichern und dadurch verbesserte lichtstabile, thermooxidativen, antibakterielle, hydrophobe und/oder hydrophile Eigenschaften erzielt werden.

Die Anforderungen an Bekleidungs-, Heim- und technische Textilien, Folien sowie Kunststoffformkörper sind nach wie vor hoch und wachsen weiter. Das kundenorientierte Spektrum reicht dabei von Kriterien an das Gebrauchsverhalten, den dauerhaften Erhalt ihrer Gebrauchseigenschaften bis hin zu Spezialfunktionen.
Neben modischen Effekten werden zunehmend funktionelle Gebrauchseigenschaften wie z. B. Wasser-, Öl- und Schmutzabweisung, Feuchtetransportkonzepte sowie antimikrobielle oder antimykotische Eigenschaften in den Mittelpunkt des Interesses gestellt, um die breitgefächerten Erwartungen des Kunststoffmarktes zu erfüllen. Dabei spielen vor allem auch Eigenschaften wie Farbgleichmäßigkeit, Lichtstabilität, Lichtechtheit, Resistenz gegen UV- und thermischen Einflüssen, antibakterielle Schutzfunktion, Antistatikausrüstung eine herausragende Rolle. Kunststoffartikel erfordern deshalb heute immer mehr maßgeschneiderte Konstruktionen und Verarbeitungstechnologien, funktionelle Ausrüstungen und spezifisch wirksame Additive.

Diese Faktoren wirken im unterschiedlichen Wechselspiel und lösen komplizierte chemische und physikalische Abbauprozesse aus, welche zu Schädigungen und letztlich zur Zerstörung der Faserstoffe führen. Obwohl zum Mechanismus des fotochemischen Abbaus von Polyamid gesicherte Erkenntnisse vorliegen, verläuft er als ein unübersichtlicher Prozeß und ist nur an Modellverbindungen gesichert [G. Reinert, Melliand Textilber. 1 (1988), S. 58-64].
Abbaureaktionen werden besonders dann zu einem schwerwiegenden Problem, wenn aus Kunststoffen Formkörper gefertigt werden, die einer starken Lichteinwirkung, thermooxidativen Belastung, hohen mechanischen oder sonstigen biologisch ausgelösten schädigenden Beanspruchungen unterliegen. Dies trifft z.B. für Artikel zu, die den genannten Einflüssen unterliegen. Praktisch alle heute in diesen Anwendungen befindlichen Kunststoffe müssen stabilisiert werden, um Abbauprozesse, die letztlich zu Verlusten ihrer wichtigsten Gebrauchseigenschaften führen, zu verhindern.
Praktisch alle technischen Kunststoffe und werden durch spezielle Additivierungen mit sogenannten Lichtschutzmitteln, Antioxidantien, Thermostabilisatoren, Antimikrobiale oder teilweise mit hydrophoben oder hydrophilen Agenzien versehen. Diese Additive oder Stabilisatoren sind nach Wirkungsweisen neben in verschiedene Substanzklassen aufgeteilt:
- UV-Absorber auf Basis von 2-Hydroxybenzophenon- oder 2-Hydroxybenzotriazolderivaten;
- Energie-Quencher (Nickel-Komplexverbindungen);
- Radikalfänger auf Basis sterisch gehinderter Amine (HALS) [z.B. Ullmanns Encyclopedia of Industr. Chem. Vol. A 20, 1992, S.459-475];
- halogenierte oder Metallkomplex-Aromaten, Tributylzinnoxid;
- sterisch gehinderte Phenole;
- sekundäre aromatische Amine;
- kationische Tenside.

Die Additivierung von Kunststoffen wird auf zwei Wegen praktiziert: Entweder durch homogenes Einmischen in die Polymermatrix vor bzw. während der Polymerverarbeitung oder durch ein Oberflächen-Coating mit stabilisierten Überzügen in nachbehandelnden Verfahrensstufen. Der einfachere und üblichere Weg ist ein Zumischen der Stabilisatoren als Masterbatch mit Gehalten von bis zu 20 % an wirksamer Substanz. Im verarbeiteten Kunststoff liegt dann eine homogene Verteilung der Stabilisatoren vor. Nachteilig bei dieser Lösung ist der erhöhte Verbrauch an Stabilisatoren.
Alle heute etwa 40 Marktanbieter von Kunststoffadditiven sind bemüht, umweltfreundliche und qualitativ hochwertige Produkte zur Polymerstabilisierung anzubieten.
Diesen Forderungen wird mit entsprechendem Entwicklungsaufwand durch Weiterentwicklungen von bestimmten Produktgruppen entsprochen.
Bekannt ist beispielsweise zu Lichtstabilisierung das Bestreben, durch Strukturvariationen extrem hohe Lichtschutzeigenschaften zu realisieren [E. Kramer, Kunststoffe 86, 1996, S. 948-953] oder spezielle HALS auf eine Polymeroberfläche aufzubringen. Von Nachteil ist dabei, dass ein zusätzlicher Verfahrensschritt erforderlich ist.

Aus der JP 08-120066 ist ein Polybutylenterephthalat bekannt, das mit einem UV-Stabilisator modifiziert ist. Der UV-Stabilisator ist ein Benzotriazol, ein Benzophenon oder ein sterisch gehindertes Amin, das jeweils eine Hydroxyl-, Carboxyl- oder Carbonsäureester-Gruppe aufweist und an Carboxyl- oder Hydroxylgruppen der Polymer-Hauptkette des Polyesters durch Esterbindungen kovalent gebunden ist. Die UV-Stabilisatoren sind damit an ein Ankersegment gebunden.

In der EP 0 837 065 A1 sind Stabilisatoren offenbart, die organisches Material gegen Schädigung durch Licht, Sauerstoff oder Wärme schützen. Die Stabilisatoren sind 4-[4-(2,3-Epoxy-propoxy)-phenyl]-2,2,6,6-tetramethyl-piperidine (4-Epoxy-HALS), die am Phenylring oder am Piperidin-Stickstoff noch weiter substituiert sein können. Durch den 2,3-Epoxy-propoxy-Rest lassen sich die Stabilisatoren als Comonomere einsetzen. Die Stabilisatoren sind dann durch kovalente Bindungen mit der Polymer-Hauptkette verbunden.

In der EP 0 285 434 A ist eine flammgeschützte Polyester-Zusammensetzung beschrieben. Sie enthält als Antioxidans ein Amin und als Lichtschutzmittel ein sterisch gehindertes Amin, bevorzugt 2,2,6,6-Tetramethyl-piperidin oder ein Derivat davon. In den Beispielen ist offenbart, daß als Lichtschutzmittel auch Kondensate von 2,2,6,6-Tetramethyl-piperidin-4-ol bzw. 1,2,2,6,6-Pentamethyl-piperidin-4-ol mit Butan-1,2,3,4-tetracarbonsäure eingesetzt werden können.

Gegenstand der EP 0 103 106 A ist die Verwendung von 4-Amino-2,2,6,6-tetra-(C₁-C₃)alkyl-piperidinen, die mit epoxidierten Polybutadienen mit einer Molmasse von 500 bis 6.000 umgesetzt wurden. Das Umsetzungsprodukt ist vorgesehen als Stabilisierungsmittel für Kunststoffe, die Ester- oder CarbonamidGruppen enthalten.

In der DE-OS 22 45 335 sind synthetische Fasern und Folien mit permanent antistatischen Eigenschaften offenbart. 0,5 bis 15 % des Gewichts der Fasern bzw. Folien bestehen aus Polyethern, die einen oder mehrere Hydantoin-Ringe enthalten.

Aufgabe der Erfindung ist es, eine effiziente Methode zur hochwirksamen und dauerbeständigen Licht-, thermooxidativen, antibakteriellen, hydrophoben und/oder hydrophilen Stabilität von Kunststoffformkörpern, wie z.B. Filamenten, Folien, Spritzgussartikeln, zu entwickeln, die sparsam im Verbrauch sind und zugleich keine zusätzlichen Verfahrensschritte erfordern.

Die Aufgabe wird in überraschend einfacher Weise dadurch gelöst, dass geeignete kommerziell verfügbare Stabilisatoren bzw. Wirksubstanzen über Strukturmodifikationen so verändert werden, dass sie sich als Additive in einer oberflächennahen Schicht von Kunststofffilamenten, -formkörper und -folien durch Migration anreichern können und dort über gezielte Wechselwirkungen mit der Polymermatrix fest verankert sind. Migrationsfähigkeit und Fixierung der Stabilisatoren sind durch Integrierung Polymer-unverträglicher und -verträglicher Struktursegmente auf synthetischem Wege realisiert worden. Die Lösung sieht vor, dass bei Gelingen beider Teilzielstellungen sich die Stabilisatoren in einer oberflächennahen Schicht der Kunststoffformkörper anreichern können und somit in dem am meisten beanspruchten Bereichen wirkungsvoll zur Verfügung stehen.

Gegenstand der Erfindung ist somit ein Verfahren zur dauerbeständigen Licht-, thermooxidativen, antibakteriellen, hydrophoben und/oder hydrophilen Stabilisierung von in der Schmelze verformbaren Polymeren aus der Gruppe Polyamid 6, Polyamid 6.6, Polyethylenterephthalat und Polybutylenterephthalat durch Zusatz eines Additivs vor dem Verarbeitungsprozeß der Polymere, das dadurch gekennzeichnet ist, dass die Polymere mit einem Additiv vermischt werden, das stabilisierende Wirkkomponenten enthält, die mit für diese Polyamide oder Polyester polymer-unverträglichen Migrationselementen und für das betreffende Polymer polymer-affinen oligomeren Ankersegmenten chemisch gekoppelt sind, wobei die Wirkkomponenten 2-Hydroxy-benzophenone oder sterisch gehinderte Amine oder Benzimidazole oder sterisch gehinderte Phenole oder Polyethylenglykole oder halogenierte, hydroxylgruppenhaltige Diphenylether sind.

Die Migrationselemente sind bevorzugt aliphatische Fettalkylsäure-Derivate, besonders bevorzugt Derivate der Ölsäure, der 10-Undecensäure oder der Erucasäure.

Als Ankersegmente werden bevorzugt Oligomere aus ε-Amino-capronsäure oder Oligomere aus Hexamethylendiamin und Adipinsäure eingesetzt. Es können auch Oligomere aus Terephtalsäure oder Dimethylterephthalat und Ethylenglykol oder Oligomere aus Terephthalsäure oder Dimethylterephthalat und 1,4-Butylenglykol eingesetzt werden.

Die Kopplung der Migrationselemente mit den Ankersegmenten erfolgt bevorzugt durch Umsetzung von 2-Oxazolinderivaten der Fettalkylsäuren mit freien Carboxyl-, Hydroxyl- oder Aminogruppen der oligomeren Ankersegmente.

Die Kopplung der Wirkkomponenten and die/das Migrationselement(e) erfolgt bevorzugt über die Umsetzung von freien Hydroxyl- oder Aminogruppen der Wirkstoffe mit epoxidierten olefinischen Bindungen der Fettalkylsäuren.

Das Additiv wird vorzugsweise in einem Anteil von bis zu 5 Gew.-%, besonders bevorzugt bis zu 1 Gew.-%, bezogen auf das Gewicht der Polymere, zugegeben.

Das Synthesekonzept beruhte auf der Kopplung von verschiedenen Wirkkomponenten oder mit Migrationselementen und Ankersegmenten zu jeweils einem modifizierten Additivmolekül mit den gewünschten Eigenschaften:

| **Wirkkomponente (Stabilisator od. Additiv)** | **Migrationselement (unpolares Segment)** | **Ankersegment (Polymer-affines Segment)** |
|---|---|---|
| UV- oder Lichtstabilisator | Fettalkylsäuren (wie z.B. Ölsäure-, 10-Undecensäure-, Erucasäure-Derivate | PA6-, PA6.6-, PBT- oder PETP-Oligomere |
| Antioxidantien | Fettalkylsäuren (wie z.B. Ölsäure-, 10-Undecensäure-, Erucasäure-Derivate | PA6-, PA6.6-, PBT- oder PETP-Oligomere |
| Antimikrobiale | Fettalkylsäuren (wie z.B. Ölsäure-, 10-Undecensäure-, Erucasäure-Derivate | PA6-, PA6.6-, PBT- oder PETP-Oligomere |
| hydrophobe Substanzen | Fettalkylsäuren (wie z.B. Ölsäure-, 10-Undecensäure-, Erucasäure-Derivate | PA6-, PA6.6-, PBT- oder PETP-Oligomere |
| hydrophile Substanzen | Fettalkylsäuren (wie z.B. Ölsäure-, 10-Undecensäure-, Erucasäure-Derivate | PA6-, PA6.6-, PBT- oder PETP-Oligomere |

Die Wirksamkeit der einzelnen Funktionselemente konnte durch die Art der chemischen Struktur und die Kettenlänge der Kopplungskomponenten variiert werden.

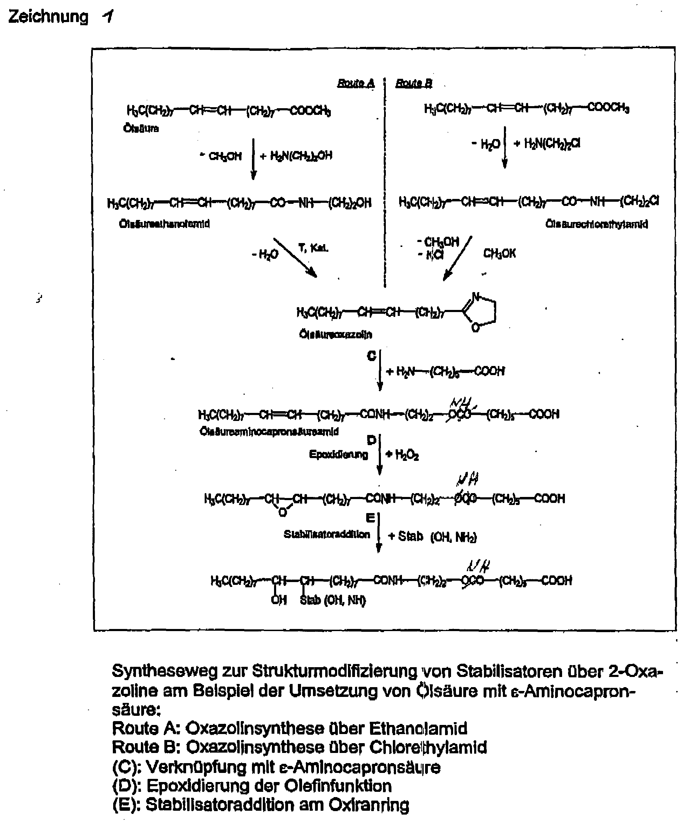

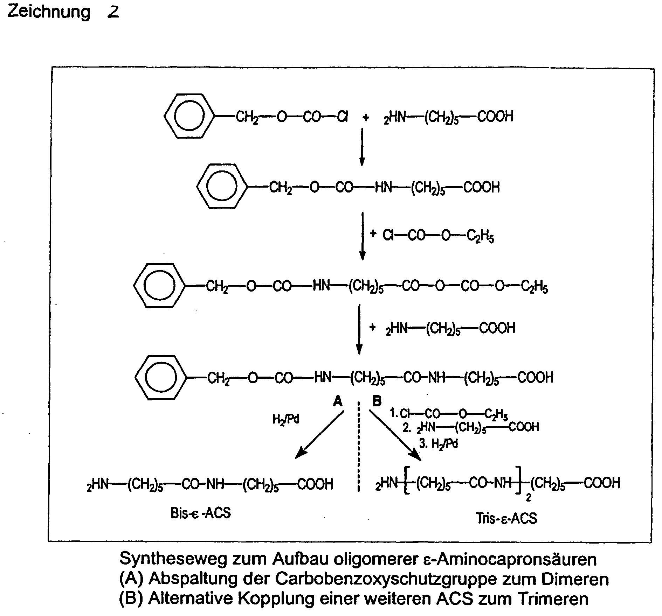

Die Lösung sieht vor, dass sich modifizierte Wirkkomponenten als Polymeradditive konventionell in die Schmelze einarbeiten lassen und sich während der Extrusion gleichmäßig im Polymeren verteilten. Aufgrund ihrer speziellen Strukturmodifikationen erfolgt danach eine gezielte Migration dieser Additive in Richtung Polymeroberfläche während des Verarbeitungsprozesses, der bereits mit der Abkühlphase bei der Filamentherstellung beginnt und sich später noch im Fertigprodukt fortsetzen kann. Diese erfindungsgemäße gewollte Migration erfolgt durch die Verknüpfung der Wirkkomponente über funktionelle Gruppen mit einem *Polymer-unverträglichen* Molekülbaustein, was letztlich zu einer Anreicherung der Additive in der oberflächennahen Schicht führt. Als Polymer-unverträgliche Komponenten sind vor allem längerkettige, ungesättigte Fettsäuren (wie beispielsweise Ölsäure-, 10-Undecensäure-, Erucasäure-Derivate geeignet.
Daneben wird erfindungsgemäß zusätzlich ein *Polymer-affines* Struktursegment integriert, welches die Funktion der Ankerwirkung übernimmt. Dadurch wird gewährleistet, dass ein vollständiges Ausblühen der Additive verhindert bzw. eine wirksame Verbindung mit der Polymermatrix im Sinne einer hohen Extraktionsbeständigkeit hergestellt wird. Hier kommen insbesondere alkylamidgruppenhaltige, ethylenglycolterephthalathaltige, butylenglycolterephthalathaltige Molekülbausteine mit aus ω-Aminocapronsäure, oder Adipinsäure und Hexamthylendiamin, oder Ethylenglycol bzw. Butylenglycol und Terephthalsäure aufgebauten Sequenzen oder Polymeroligomeren als Kopplungskomponenten in Betracht.
Die synthetischen Arbeiten zur Strukturmodifizierung von Wirkkomponenten sah vor, sie sowohl mit Polymer-unverträglichen (Migrationskomponente) als auch Matrixaffinen Strukturelementen (Ankersegment) chemisch zu verknüpfen. Im Vordergrund der unterschiedlichen Bearbeitungsrichtungen steht dabei die Kopplung von *langkettigen, ungesättigten Fettsäuren,* die über einen unpolaren Polymer-*unverträglichen* Alkylrest verfügen, mit *oligomeren Alkyl-Amiden* und Alkylestern als Polymer-verträgliche Molekülkomponenten zu Strukturbausteinen, welche die Eigenschaften Migrationsfähigkeit und Ankerwirkung in sich vereinigten. Durch den Einsatz verschiedener Fettsäuren und der Variation der Kettenlänge der oligomeren aliphatischen Alkyl-Amide und Alkylester kann die Wirksamkeit der Additive zusätzlich graduell abgestuft werden. Es werden verschiedene synthetische Wege zur Gewinnung der Zielprodukte beschritten.
Für die Verknüpfung der Fettalkylsäuren mit oligomeren Alkylamiden oder Alkylestern wurden die 2-Oxazolinderivate der Fettalkylsäuren mit freien funktionellen Gruppen der Oligomeren umgesetzt. Die erst in den letzten Jahren entwickelte Substanzklasse der 2-Oxazoline, darunter die der 2-Fettalkyl-2-Oxazoline, sind dafür besonders geeignet. Ein weiterer Vorteil ist, dass 2-Oxazoline bei Raumtemperatur stabil sind und die Reaktionen ohne Bildung von Nebenprodukten verlaufen. Bei Temperaturen oberhalb von 100°C reagieren sie rasch und selektiv mit den endständigen funktionellen Gruppen der Alkylamide und Alkylester. Die infolge der Ringöffnung gebildeten Esteramid-Etheramid- oder Aminoamid-gruppierungen sind unter Extrusionsbedingungen stabil und daher als Molekülbausteine für spezielle Kunststoffadditive und deren thermoplastische Verarbeitung geeignet.
Diese Variante der Monomerverknüpfung durch Derivatisierung der Fettalkylsäuren zu von 2-Oxazolinen als Kopplungskomponenten für Alkyl-Amide und Alkyl-Ester war besonders vorteilhaft, da die synthetisierten oligomeren Aminosäuren bzw. Hydroxyethyl- und Hydroxybutyl-terephthalate naturgemäß sowohl über Carboxyl-, Hydroxyl- und Aminogruppen verfügen, die für Umsetzungen mit dem Oxazolinring befähigt sind.
Für die präparative Gewinnung der Oxazoline werden die aus der Literatur bekannten Möglichkeiten genutzt und auf den Einsatz verschiedener Substanzen optimiert. Sie gelangen in guten Ausbeuten entweder durch Aminolyse von Carbonsäureestern mit Ethanolamin und katalytischem Ringschluß bei erhöhter Temperatur oder durch Umsetzung mit Chlorethylamin und Ringschluß durch Abspaltung des Halogens mit Basen.
Die beiden Synthesewege zur Darstellung der Fettalkyl-2-oxazoline und der weitere Verlauf des Synthesekonzeptes zur Entwicklung der Migrationkomponenten ist am Beispiel der Kopplung von Ölsäure mit ε-Aminocapronsäure in der Zeichnung 3 wiedergegeben. Das Reaktionsschema beinhaltet wiederum nachfolgende Epoxidierung und Stabilisatoraddition.

Gegenstand der Erfindung sind ferner Kunststoff-Filamente, - Formkörper oder -Folien aus in der Schmelze verformbaren Polymeren, die ein Additiv enthalten, das ihnen dauerbeständige Lichtstabilität, thermooxidative, antibakterielle, hydrophobe und/oder hydrophile Stabilität verleiht, die dadurch gekennzeichnet sind, dass in dem Additiv Wirkkomponenten mit polymer-unverträglichen Migrationselementen und polymer-affinen Ankersegmenten gekoppelt sind, so dass sie sich in einer oberflächennahen Schicht der Kunststoff-Filamente, -Formkörper oder -Folien anreichern, wobei die Polymere Polyamid 6, Polyamid 6.6, Polyethylenterephthalat oder Polybutylenterephthalat sind und die Wirkkomponenten 2-Hydroxy-benzophenone oder sterisch gehinderte Amine oder Benzimidazole oder sterisch gehinderte Phenole oder Polyethylenglykole oder halogenierte, hydroxylgruppenhaltige Diphenylether sind.

Die Migrationselemente sind bevorzugt aliphatische Fettalkylsäure-Derivate, besonders bevorzugt Derivate der Ölsäure, der 10-Undecensäure oder der Erucasäure.

Für Polyamid 6 sind die Ankersegmente bevorzugt gekoppelte Monomereinheiten von ε-Aminocapronsäure, für Polyamid 6.6 bevorzugt Oligomere aus Hexamethylendiamin und Adipinsäure, für Polyethylenterephthalat bevorzugt Oligomere aus Terephthalsäure und Ethylenglykol und für Polybutylenterephthalat bevorzugt Oligomere aus Terephthalsäure und 1,4-Butylenglykol.

Die Kopplung der Migrationselemente den Ankersegmenten erfolgt bevorzugt durch Umsetzung der 2-Oxazolin-Derivate der Fettalkylsäuren mit den freien Carboxyl-, Hydroxyl- oder Aminogruppen der oligomeren Ankersegmente.

### Beispiele:

Die Auswahl von geeigneten Wirkkomponenten erfolgte aus der Produktpalette kommerziell verfügbarer Handelsprodukte. Orientiert wurde vorrangig auf Produkte der Substanzklassen 2-Hydroxybenzophenone, sterisch gehinderter Amine (HALS). Zu beachten ist, daß die Kopplung der Wirkkomponenten sterisch gehinderter Phenole, Polyethylenglykole und Antimikrobiale über deren funktionelle Gruppen an migrationsfähige Moleküle nicht zu einer Blockierung ihrer Wirksamkeit aufgrund der Veränderung ihrer chemischen Struktur führen durfte. Dieses Problem wurde insbesondere bei den 2-Hydroxybenzophenonen verhindert, indem neben der ortho-phenolischen Hydroxylgruppe eine weitere Hydroxygruppe als Kopplungsmöglichkeit am Stabilisatormolekül vorhanden sein mußte. Monofunktionelle Verbindungen mußten unberücksichtigt bleiben.
Bei dem Einsatz und der chemischen Kopplung von HALS-Verbindungen trat das Problem einer möglichen Deaktivierung der Stabilisatorwirkung durch Umsetzungen unter Nutzung ihrer funktionellen Gruppen mit migrationsfähigen Spacerkomponenten weniger auf, da verschiedene Produkte als Stabilisatoren bereits über N-Derivatisierungen verfügen. Bei diesen Substanzen ist die stabilisierende Gruppierung sowohl im N-Hals auch im N-substituierten Zustand wirksam, eine N-Alkylierung blockiert deren Wirkung nicht. Voraussetzung für eine Addition an die Migrationskomponenten war jedoch die Reaktionsfähigkeit der N-H-Funktion des Piperidinringes mit epoxidierten Zwischenstufen.
Unter Berücksichtigung der genannten Auswahlkriterien wurden einerseits aus der Gruppe der 2-Hydroxybenzophenone difunktionelle Verbindungen wie beispielsweise BP-UVA3, BP-UVA 7 und die Irganox-Typen der Fa. Ciba und andererseits sterisch gehinderte Amine wie HALS 6 und 15 für die Projektbearbeitung herangezogen. Darüber hinaus wurden Benzotriazol-basierende UV-Absorber eingesetzt. Als weitere Wirkkomponenten wurden aus der Gruppe der antimikrobiell wirksamen Substanzen der halogenierten, hydroxylgruppenhaltigen Diphenylether, zum Beispiel das 2,4,4'-Trichloro-2-hydroxy-diphenylether, und zur Hydrophilierung niedere Polyethylenglykole für Kopplugsreaktionen berücksichtigt.
Einige Vertreter der relevanten Stabilisatoren sind in der nachfolgenden Tabelle 1 zusammengestellt.

**Tabelle 1: Auswahl von Wirkkomponenten für Umsetzungen mit migrations-fähigen Spacermolekülen**

| | |
|---|---|
| 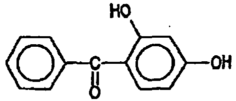 | BP-UVA 3 |
| | CAS 131-56-6 |
| 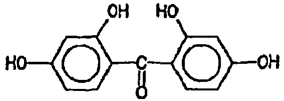 | BP-UVA 7 |
| | CAS 131-55-5 |
| 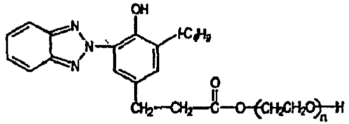 | BT-UVA 8 |
| | CAS 104810-48-2 |
| 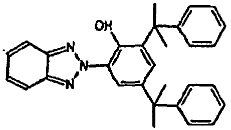 | TINUVIN 234 |
| | CAS 70321-86-7 |
| 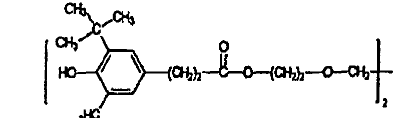 | IRGANOX 245 |
| | CAS 36443-68-2 |
| 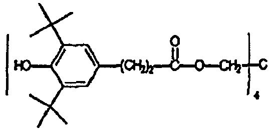 | IRGANOX 1010 |
| | CAS 6683-19-8 |
| 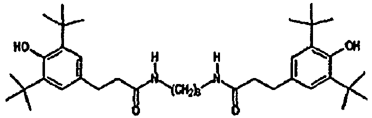 | IRGANOX 1098 |
| | CAS 3380-34-5 |
| 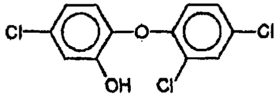 | IRAGUARD 81000 |
| | CAS 62782-03-0 |
| 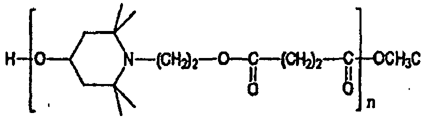 | HALS 7 |
| | CAS 70198-29-7 |
| 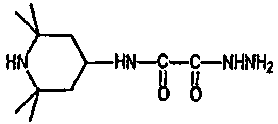 | HALS 15 |
| | CAS 122035-71-6 |

Der definierte Aufbau oligomerer Amide als Ankerkomponente in PA6 aus ε-ACS erfolgte über die Nutzung von Carbobenzoxyderivaten. Diese Synthesemethode beruht darauf, daß man zunächst die Aminogruppe einer ACS durch Einführen des Benzylchlorkohlensäureesters abschirmt, die Carboxylgruppe zum Ethylester aktiviert und die Kopplung mit einer weiteren ACS durch Aminolyse vornimmt. Die Absprengung der Schutzgruppe erfolgt durch katalytische Hydrierung. Günstige Reaktionsbedingungen an Palladiumkontakten waren Wasserstoffdrucke zwischen 45 und 55 bar, Temperaturen von 45 °C und Ausschluß von Wasser in den Reaktionsgemischen.

Carbobenzoxylierte Zwischenprodukte konnten entweder direkt zum gewünschten Zielprodukt hydriert oder aber zum Koppeln einer weiteren Sequenz herangezogen werden.
Aufgebaut wurden Addukte von bis zu fünf Monomereinheiten. Im Detail gelangen die Synthesen nach folgenden Arbeitsvorschriften: Bis-ε-Aminocapronsäure

### a) Carbobenzoxy-ε-ACS

Zu einer Lösung aus 0,5 mol ε-ACS in 125 ml 4N NaOH werden unter Kühlung parallel 85,3 g Chlorameisensäurebenzylester und weitere 125 ml Lauge zugetropft. Das Reaktionsgemisch wird 1 Std. bei 0 °C nachgerührt und anschließend ausgeethert. Nach Verdünnung mit Wasser wird angesäuert, der Niederschlag abgesaugt und gewaschen.

| | |
|---|---|
| Ausbeute: 81,0 g (61 %) | Fp: 56,5 °C (DSC), Lit. 53 °C |

### b) Carbobenzoxy-bis ε-ACS

66,2 g Carbobenzoxy-ε-ACS werden in 800 ml Toluol gelöst und mit 25 g Triethyl-amin versetzt. Danach werden unter Rühren und Eiskühlung erst 27 g Chlorameisensäureethylester und eine Lösung von 32,5 g ε-ACS in 125 ml 2N NaOH zugegeben, wobei der pH-Wert mit Lauge auf ca. 8 gehalten wird. Durch Zugabe von Wasser wird der Niederschlag gelöst, vom Toluol abgetrennt und die wässerige Phase ausgeethert. Der nach Ansäuern ausgefällte Niederschlag kann aus Ethylacetat umkristallisiert werden.

| | |
|---|---|
| Ausbeute: 57 g (86 %) | Fₚ: 106,9 °C (DSC), Lit. 106 °C |

### c) Bis-ε-ACS

90 g Carbobenzoxy-bis-ε-ACS, 380 ml absoluter Methanol und 0,8 g Palladium auf Aktivkohle (10 % Pd) werden in einen Parr-Rührautoklaven gegeben und unter Rühren mit einem Wasserstoffdruck von 50 bar beaufschlagt. Bei Druckkonstanz wird langsam auf 40 °C erwärmt, bis die Reaktion anspringt. Der Reaktionsverlauf wird über eine automatische Gasdosierung mittels Büchi-Gascontroller gesteuert. Die Umsetzung ist nach einigen Stunden beendet, wenn kein Wasserstoff-Verbrauch mehr erfaßt wird. Die klare Lösung wird vom Kontakt abfiltriert, das Produkt mit Ether gefällt und gewaschen.

| | |
|---|---|
| Ausbeute: 48,1 g (82,8 %) | Fₚ: 200,9 °C (DSC), Lit. 199 °C |

### Tris-ε-aminocapronsäure

### a) Carbobenzoxy-tris-ε-ACS:

Eine klare Lösung von 37,8 g Carbobenzoxy-bis-ε-aminocapronsäure in 500 ml getrocknetem Tetrahydrofuran wird bei -5 °C mit 10 g Triäthylamin versetzt. Nacheinander werden 10,8 g Chlorameisensäureethylester und eine Lösung aus 26,2 g ε-Aminocapronsäure in 100 ml 2N NaOH langsam zugetropft. Es wird weitere 3 Std. bei Raumtemperatur weitergerührt und der pH auf 8 eingestellt. Nach Ansäuern wird der Niederschlag abgesaugt und ggf. aus mit Wasser gesättigtem Ethylacetat umkristallisiert.
Ausbeute: 41,6 g (84,7 %)
Fₚ: 133,8 °C (DSC), Lit. 133-134 °C

### b) Tris-ε-aminocapronsäure:

49,1 g Carbobenzoxy-tris-ε-ACS werden in 350 ml getrocknetem Methanol gelöst und mit 0,5 g Pd-Katalysator auf Kohle bei 45 °C und unter einem Druck von 50 bar durch kontinuierliche Wasserstoffzudosierung hydriert. Aus dem verbleibenden Reaktionsgemisch wird das überschüssige Methanol abfiltriert, der Niederschlag zur Abtrennung vom Katalysator in Wasser gelöst und erneut filtriert. Die Aufarbeitung zum Feststoff gelingt durch Einengen im Vakuum.

| | |
|---|---|
| Ausbeute: 31 g (86,8 %) | Fₚ: 214 °C (DSC), Lit. 203-204 °C |

### Tetrakis-ε-aminocapronsäure

### a) Carbobenzoxy-tetrakis-ε-aminocapronsäure:

Zu einer Lösung von 37,8 g Carbobenzoxy-bis-ε-aminocapronsäure in 800 ml THF werden bei -5 °C 10,1 g Triethylamin und danach unter Rühren 10,8 g Chlorameisensäureethylester zugetropft. Das Gemisch, welches neben dem gemischten Anhydrid den Niederschlag von Triethylaminhydrochlorid enthält, wird tropfenweise mit einer Lösung von 24,4 g Bis-ε-ACS in 100 ml 1N NaOH versetzt und 0,5 Std. bei 0 °C gerührt. Das Hydrochlorid löst sich auf und das Carbobenzoxy-tetra-derivat kann als weißer Niederschlag gewonnen werden. Aus Essigsäure wird mit Wasser umgefällt, filtriert und getrocknet.

| | |
|---|---|
| Ausbeute: 27,5 g (45,5 %) | Fₚ: 156 °C (DSC), Lit. 154-155 °C |

### b) Tetrakis-ε-aminocapronsäure:

30,8 g Carbobenzoxy-tetrakis-ε-aminocapronsäure werden in 300 ml wasserfreiem Methanol und unter Zugabe von 0,6 g Pd-Kohle-Katalysator bei 45 °C und unter 55 bar Wasserstoff 8 Std. hydriert. Das Produkt wird durch Lösen in Wasser und Filtration vom Kontakt befreit und nach Einengen der Mutterlauge aufgearbeitet.
Ausbeute: 17,9 g (74,6 %)
Fₚ: 207 °C (DSC), Lit.: 206-207 °C

### Pentakis-ε-aminocapronsäure

### a) Carbobenzoxy-pentakis-ε-aminocapronsäure:

Eine auf -5°C abgekühlte Lösung von 24,5 g Carbobenzoxy-tris-ε-ACS und 5 g Triethylamin in 800 ml DMF wird mit 5,4 g Chlorameisensäureethylester und nach 15 Min. tropfenweise mit einer Lösung aus 12,2 g Bis-ε-ACS in 50 ml 1N NaOH versetzt. Das zunächst gebildete Triethylaminhydrochlorid löst sich auf und nach einer Stunde Rühren bei 0°C bildet sich ein feiner Niederschlag. Das schwach alkalische Gemisch wird bei Raumtemperatur weitergerührt, 5 Min. erwärmt, mit Wasser verdünnt und anschließend der Niederschlag abgesaugt. Dieser wird mit 0,5N NaOH und Wasser gewaschen und anschließend getrocknet.
Eine Umfällung des Produktes erfolgt aus heißer Essigsäure mit dem dreifachen Volumen Wasser. Aus Ethanol wird umkristallisiert.

| | |
|---|---|
| Ausbeute: | 17,5 g (48,9 %) |
| Fₚ: 158 °C (DSC), Lit. 164-165 °C | |

### b) Pentakis-ε-ACS:

Die Hydrierung des Carbobenzoxyderivates erfolgte in Methanol und in Gegenwart von Pd-Katalysator unter den üblichen Bedingungen. Die weitere Aufarbeitung durch Filtration und Umkristallisation führte trotz mehrerer Reinigungsoperationen häufig nicht zu einem einheitlichen Produkt, welches den Reinheitsanforderungen für die weiteren Synthesestufen entsprach.

| | |
|---|---|
| Ausbeute: 15-35 % | Fₚ: 197-205 °C (DSC), Lit. 208 °C |

Die Ankerkomponenten für PA6.6 wurden aus den Monomeren Hexamethylendiamin und Adipinsäure synthetisiert.
Das Hexamethylendiamin-Adipinsäuremonoamid wurde durch Umsetzung des Amins in einer 56-%igen wässerigen Lösung der Adipinsäure bei 90 °C dargestellt.
Durch Umsetzung des carbobenzoxylierten Zwischenprodukts mit Hexamethylendiamin oder einem weiteren Monoamid entstanden eine trimere bzw. tetramere Oligomereinheit. PET-verträgliche Ankerkomponenten waren durch Umsetzung von Terephthalsäure oder Terephthalsäuredimethylester mit Ethylenglykol im Überschuß zugänglich. Zur Synthese von Bis-(2-hydroxyethyl)-terephthalat wurde im 4-fachen Überschuß des Diols und mit Manganacetat als Katalysator gearbeitet. Höhere Oligomere dieses Typs wurden durch Zusammenschmelzen des Produkts erhalten. Ankerkomponenten für PBT wurden durch Umsetzungen von Terephthalsäurederivaten mit Diethylenglykol hergestellt. Die Herstellung von Bis-(2-hydroxyethyl)-terephthalat als PET-verträgliches Ankersegment gelang nach folgender Arbeitsvorschrift:
400 g Terephthalsäuredimethylester werden in einem mit Stickstoffeinleitung, Rührer und Destillationsbrücke versehenen Dreihalskolben mit 800 ml absolutem Äthylenglykol vermischt und nach Zusatz von 6 g Tri-n-butylamin oder 40 mg Manganacetat als Katalysator erhitzt. Die Reaktionstemperatur wird
30 min. auf 160 °C und anschließend auf 190 °C gehalten.
Dabei wird ein schwacher Stickstoffstrom durch die Reaktionsmischung geleitet. Nach etwa 2-3 Stunden ist die theoretische Methanolmenge von 167 ml abgespalten. Danach wird die Reaktionsmischung in 2 l Äthylenglykol gegossen und 8 h auf 195 °C erhitzt. Beim Abkühlen kristallisiert der Bisglykolester aus. Die Mischung wird mit 4 l destilliertem Wasser umkristallisiert.

| | |
|---|---|
| Ausbeute: 330 g | Fₚ: 113 °C |

Nach gleicher Arbeitsweise erhält man das Bis-(4-hydroxyethyl)-terephthalat, wenn man an Stelle von Ethylenglykol 1,4-Butanol einsetzt.

Für die Verknüpfung der Fettalkylsäurederivate (Migrationskomponenten) mit den oligomeren Alkylamiden bzw. Alkylestern (Ankersegmente) wurde der Syntheseweg über die Addition am 2-Oxazolinring beschritten.
Unter Berücksichtigung der Stellung der olefinischen Bindung in der Monomereinheit wurden Ölsäure, 10-Undecensäure und Erucasäure (Z-13-Docosensäure) als Polymer-unverträgliche Kopplungskomponenten bevorzugt verwendet.
Dieses Synthesekonzept über die Nutzung von Oxazolinen als Kopplungsagenzien erlaubte zugleich die Reinigung der Säuren über die Darstellung der Methylester als Oxazolin-Vorstufen. Die Methylester aller eingesetzten Fettsäuren konnten mit saurer Katalyse in hohen Ausbeuten und Reinheitsgraden gewonnen werden. Diese wurden dann durch Aminolyse mit Ethanolamin bei erhöhter Temperatur und Titan-(IV)-butylat als Katalysator in die 2-Oxazolinderivate nach einem einstufigen Prozeß überführt. Die in labortechnischen Mengen dargestellten Derivate der Fettalkylsäuren gehen aus nachfolgender Tabelle 2 hervor:

**Tabelle 2: Übersicht von Monomeren zur Synthese von Fettalkylsäurederivaten als migrationsfähige Kopplungskomponenten**

| **Produkt/ Derivat** | **Stoffdaten** | |
|---|---|---|
| | Schmelz-/Siedepunkt | Molmasse Jodzahl¹⁾ Verseif. zahl²⁾ |
| 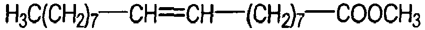 | Kₚ₂ 168-170 °C | 296,49 |
| | | 85,6 |
| Ölsäuremethylester | | 189,2 |
| 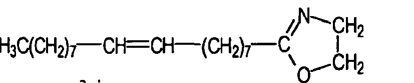 | K_{p0,3} 200-210 °C | 82,5 |
| Ölsäureoxazolin | | - |
| 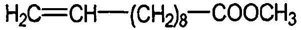 | mₚ -27, 5 Kₚ₁₀ 124 °C | 128,0 |
| 10- Undecensäuremethylester | | 289,9 |
| 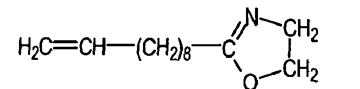 | K_{p0,15} 135-140 °C | 121,2 |
| 10-Undecensäureoxazolin | | - |
| 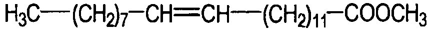 | K_{p2,4} 160 °C | 72,0 |
| Erucasäuremethylesterg | | 162 |
| 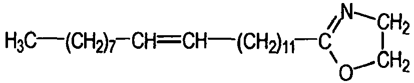 | | 69,8 |
| Erucasäureoxazolin | | |

| | | |
|---|---|---|
| ¹⁾ Bestimmung in Chloroform ²⁾ mg KOH/g Substanz | | |

Im Detail wurden die Substanzen nach folgenden Vorschriften synthetisiert:

### Ölsäureoxazolin

### a) Ölsäuremethylester [45]

100 g technische Ölsäure (70 %) werden mit 800 ml Methanol und 65 ml konz. Salzsäure gemischt und 3 Std. am Rückfluss gekocht. Nach dem Abkühlen wird die Hauptmenge Methanol vom Rohester dekantiert, 200 ml Ether und 100 ml 5%-ige Kaliumcarbonatlösung zugegeben, danach die organische Phase zwei mal mit Wasser gewaschen. Nach Trocknung über CaCl₂ wird zur Gewinnung des reinen Esters destilliert.

| | |
|---|---|
| Ausbeute: 91 g (87 %) | Kₚ: 155 °C/1 mbar |
| Jodzahl: 84,7 | Verseifungszahl: 188,3 |

### b) Ölsäureoxazolin [27,46]

124 g Ölsäuremethylester, 61 g Ethanolamin und 1,4 g Titan-(IV)-butylat werden unter N₂-Atmosphäre langsam auf 140-150 °C erhitzt und dabei Methanol abdestilliert. Danach wird unter reduziertem Druck bei ca. 400 mbar über-schüssiges Ethanolamin entfernt. Anschließend werden über eine 300 mm-Kolonne restliches Ethanolamin und Niedrigsieder ausgetrieben und das Oxazolin fraktioniert.

| | |
|---|---|
| Ausbeute: 108 g (84 %) | Kₚ: 188-191 °C/ 1,4 mbar |
| Jodzahl: 82,6 | Brechungsindex: 1,470 (20 °C) |

Reinheit über Titration: >99,5 %
IR: 1669 cm⁻¹ (C=N), 987, 951 cm⁻¹ (Oxazolin)

### 10-Undecensäureoxazolin

### a) 10-Undecensäuremethylester

100 g Undecylsäure (90 %) werden mit 800 ml Methanol und 65 ml konz. HCl 3 Std. am Rückfluss gekocht, anschließend die Hauptmenge des verbliebenen Methanols abdestilliert. Der Rückstand wird mit 400 ml Ether aufgenommen, mit 5%-iger K₂CO₃-Lösung neutralisiert und danach die organische Phase mit Wasser gewaschen. Nach Trocknung über CaCl₂ wird zunächst der Ether entfernt, danach der Rückstand über Kolonne fraktioniert.

| | |
|---|---|
| Ausbeute: 88 g (82 %) | Kₚ: 91 °C/ 1 mbar |
| Jodzahl: 126,5 | Verseifungszahl: 282 |

### b) 10-Undecensäureoxazolin

99,2 g Methylester, 76,3 g Ethanolamin und 1,7 g Titan-(IV)-butylat werden unter N₂ auf 170 °C erhitzt und der entstehende Methanol entfernt. Dann wird im Vakuum zuerst überschüssiges Ethanolamin, anschließend über eine Kolonne das Zielprodukt fraktioniert. Es resultiert eine helle, wachsartige Substanz.

| | |
|---|---|
| Ausbeute: 78 g (75 %) | Kₚ: 105-107 °C/ 1 mbar |
| Jodzahl: 118,7 | Reinheit über Titration: >99 % |

IR: 1669 cm⁻¹ (C=N), 989, 953 cm⁻¹ (Oxazolin)

### Erucasäureoxazolin

### a) Erucasäuremethylester

100 g Erucasäure werden mit 800 ml Methanol und 65 ml HCl versetzt und 3 Std. zum Rückfluss erhitzt. Nach dem Abkühlen wird die Hauptmenge Methanol abgegossen, der Rohester mit 200 ml Ether aufgenommen, mit 100 ml K₂CO₃-Lö-sung versetzt und gewaschen. Nach Entfernung des Ethers wird getrocknet und im Vakuum gereinigt.

| | |
|---|---|
| Ausbeute: 80 g (77 %) | Kₚ: 174 °C/ 0,9 mbar |
| Jodzahl: 70,4 | Verseifungszahl: 160,9 |

### b) Erucasäureoxazolin

141 g Erucasäuremethylester, 41 g Ethanolamin und 1,4 g Titan-(IV)-butylat werden unter N₂ langsam auf 180 °C erhitzt, dabei das bei der Umsetzung entstehende Methanol mit dem Trägergas abdestilliert. Unter reduziertem Druck wird dann überschüssiges Ethanolamin vollständig entfernt. Der Rückstand wird aus Tetrachlorkohlenstoff umkristallisiert.

| | |
|---|---|
| Ausbeute: 121 g (83 %) | Fₚ: 78,4 °C (DSC) |
| Jodzahl: 65,2 | Reinheit über Titration: >99 % |

IR: 1643 cm⁻¹ (C=N), 1036, 1059 cm⁻¹ (Oxazolin)

Nach der Verknüpfung von Migrations- und Ankerkomponenten wurden reaktive Zwischenstufen für die Wirkstoffkopplung durch Epoxidierung hergestellt.
Für die chemischen Verknüpfungen der Fettalkylsäuren (Migrationskomponenten) mit den oligomeren Alkylamiden bzw. Alkylestern (Ankerkomponenten) wurde der Weg der Umsetzung über die Oxazolinderivate beschritten, der mit den bereits genannten Vorteilen einstufiger Darstellungsprozeß ohne Isolierung von Zwischenprodukten bei der Oxazolinsynthese, Möglichkeit zur Umsetzung sowohl mit Amino- als auch Carboxylgruppen und Hydroxylgruppen der Oligomeren verbunden war. Die Addition der Fettalkylsäure-2-oxazoline an Alkylamide, Aminocapronsäure oder Alkylester erforderte die Erarbeitung geeigneter Reaktionsbedingungen, unter denen die Addition der Komponenten unter Ringöffnung der Oxazoline zu reinen Zielprodukten führte. Zu optimieren waren Einsatz und Wahl geeigneter Lösungsmittel, Temperaturführung und Aufarbeitung der Reaktionsprodukte.
Die Verknüpfung der 2-Oxazolinederivate von Ölsäure, 10-Undecensäure und Erucasäure mit den Alkylamiden aus einfacher bzw. Tris-ε-aminocapronsäure gelang nach den folgenden Arbeitsvorschriften:

### Ölsäure-ε-ACS-ethylesteramid:

46,14 g (0,15 mol) Ölsäureoxazolin und 19,65 g (0,15 mol) ε-Aminocapronsäure werden in 240 ml getrocknetem DMAC unter Rühren gelöst und langsam bis auf Rückflußtemperatur erwärmt, dann unter Stickstoffatmosphhäre 3 Std. weitergerührt. Beim Erreichen der Siedetemperatur wird das Gemisch klar. Nach der Reaktionszeit und Abkühlung wird das überschüssige Lösungsmittel im Vakuum abdestilliert. Das im Rückstand verbleibende Rohprodukt erstarrt nach Abkühlen wachsartig und kann aus Ether bei Temperaturen unter 0°C zusätzlich gereinigt werden.

| | | | |
|---|---|---|---|
| Ausbeute: 61 g (90 %) | | Jodzahl: 57,0 | |
| Elementaranalyse: | C: 71,07 % | H: 11,58 % | N: 6,08 % |

### Ölsäure-tris ε-ACS-ethylesteramid:

15,38 g (0,05 mol) Ölsäureoxazolin und 17,85 g (0,05 mol) Tris-ε-Aminocapronsäure werden in 80 ml getrocknetem DMAC unter Stickstoffatmosphäre und Rühren gelöst und langsam bis auf Rückflusstemperatur erwärmt. Beim Erreichen der Siedetemperatur wird das Gemisch klar und es wird 4 Std. weitergerührt.. Nach Abkühlen wird das überschüssige Lösungsmittel im Vakuum entfernt. Das im Rückstand verbleibende Rohprodukt wird in der Kälte fest, deshalb wird es noch im flüssigen Zustand warm aus der Apparatur gewonnen und mittels Glasstab unter Rühren und Kühlung zur Erstarrung gebracht. Aus 100 ml Ether kann umkristallisiert werden, es wird filtriert und im Vakuum getrocknet.

| | | | |
|---|---|---|---|
| Ausbeute: 29,8 g (90 %) | | Jodzahl: 38,8 | |
| Elementaranalyse: | C: 66,20 % | H: 11,78 % | N: 8,05 % |

### Undecensäure-ε-ACS-ethylesteramid:

31,41 g (0,15 mol) Undecensäureoxazolin und 19,65 g (0,15 mol) ε-Amino-capronsäure werden in 240 ml getrocknetem DMAC unter Rühren und Stickstoff gelöst, langsam bis auf Siedetemperatur erhitzt und dann 3 Std. am Rückfluss gehalten. Nach der Umsetzung wird abgekühlt und ca. 220 ml des Lösungsmittels im Vakuum abdestilliert. Der helle, wachsartige Rückstand kann zur Reinigung in Ether aufgenommen und durch starke Kühlung ausgefroren und filtriert werden. Analyse:

| | | | |
|---|---|---|---|
| Ausbeute: 50 g (98 %) | | Jodzahl: 72,4 | |
| Elementaranalyse: | C: 66,72 % | H: 10,61 % | N: 7,83 % |

### Undecensäure-tris-ε-ACS-ethylesteramid:

10,47 g (0,05 mol) Undecensäureoxazolin und 17,85 g (0,05 mol) Tris-ε-Amino-capronsäure werden in 80 ml getrocknetem DMAC unter Rühren und Stickstoff gelöst und bis auf Rückflusstemperatur erhitzt und 4 Std. am Rückfluss gehalten. Anschließend wird abgekühlt, überschüssiges DMAC im Vakuum abdestilliert. Der Rückstand wird noch im flüssigen Zustand in ein Becherglas umgefüllt und unter weiterer Kühlung zur Erstarrung gebracht. Aus 150 ml Ether kann gelöst und in der Kälte umkristallisiert werden. Filtration und Vakuumtrocknung führen zu einem wachsartigen Produkt.

| | | | |
|---|---|---|---|
| Ausbeute: 26 g (91 %) | | Jodzahl: 41,0 | |
| Elementaranalyse: | C: 64,47 % | H: 10,16 % | N: 8,94 % |

### Erucasäure-ε-ACS-ethylesteramid:

54,54 g (0,15 mol) Erucasäureoxazolin und 19,65 g (0,15 mol) ε-Aminocapronsäure werden in 240 ml getrocknetem DMAC unter Rühren und Stickstoff gelöst, langsam bis auf Siedetemperatur erwärmt und dann und dann 3 Std. am Rückfluss gekocht. Nach dem Abkühlen wird das Lösungsmittel im Vakuum entfernt und der Rückstand in 240 ml Methanol durch kurzzeitiges Erwärmen bis zum Sieden aufgenommen und heiß filtriert. Das Produkt kristallisiert aus dem Filtrat über Nacht im Kühlschrank und wird im Vakuum bei Raumtemperatur getrocknet.

| | | | |
|---|---|---|---|
| Ausbeute: 53 g (72 %) | | Jodzahl: 50,4 | |
| Elementaranalyse: | C: 72,63 % | H: 11,99 % | N: 6,10 % |

### Erucasäure-tris-ε-ACS-ethylesteramid:

18,18 g (0,05 mol) Erucasäureoxazolin und 17,85 g (0,05 mol) Tris-ε-Aminocapron-säure werden in 100 ml getrocknetem DMAC gelöst und 4 Std. unter Stickstoff bei Siedetemperatur gerührt. Nach dieser Reaktionszeit wird abgekühlt, das Lösungsmittel im Vakuum entfernt. Das im Rückstand erstarrte Rohprodukt wird in ca. 100 ml Ether aufgeschwemmt, unter Erwärmen gut durchgerührt und danach abgekühlt und anschließend filtriert. Die Trocknung erfolgt im Vakuum bei Raumtemperatur.

| | | | |
|---|---|---|---|
| Ausbeute: 35 g (98 %) | | Jodzahl: 30,8 | |
| Elementaranalyse: | C: 68,86% | H: 10,98 % | N: 6,42 % |

Die Kopplung der Fettalkyloxazoline mit dem PET-affinen Bis-(2-hydroxyethyl)-terephthalat(BHET) erfolgte nach folgenden Synthesevorschriften:

### 2.2'-Bis-(oxyethylterephthalato)-Erucasäureamid

36,36 g Erucasäureoxazolin und 12,7 g BHET werden in 80 ml Dimethylacetamid langsam unter Rühren bis zum Rückfluß erwärmt und 3 h umgesetzt. Nach dem Abkühlen wird das Reaktionsgemisch in Methanol gegossen. In der Kälte setzt sich das Produkt fest ab, wird abgesaugt und im Vakuum getrocknet.

| | |
|---|---|
| Ausbeute: 40 g | F: 80-82 °C |

### 2.2'-Bis-(oxyethylterephthalato)-Undecensäureamid

20,94 g Undecensäureoxazolin und 12,7 g BHET werden in 80 ml Dimethylacetamid gelöst und 3 h bei 169 °C gerührt. Danach wird die Hauptmenge des Lösungsmittels im Vakuum abdestilliert. Nach dem Abkühlen wird das wachsartige Rohprodukt durch Umkristallisieren in Aceton gereinigt.

| | |
|---|---|
| Ausbeute: 25 g | F: 182-184 °C. |

### 2.2'-Bis-(oxyethylterephthalato)-Ölsäureamid

30,76 g Ölsäureoxazolin werden mit 12,7 g BHET in 80 ml Dimethylacetamid bei 167 °C innerhalb von 3 Stunden umgesetzt. Nach Abdestillieren des Lösungsmittels wird der wachsartige Rückstand in Aceton gelöst und in der Kälte gefällt. Es wird abgesaugt und bei Raumtemperatur getrocknet.

| | |
|---|---|
| Ausbeute: 37 g | F: |

Dem weiteren Synthesekonzept folgend waren nach der bis hier beschriebenen Verknüpfung von Migrations- und Ankerkomponenten die chemischen Voraussetzungen für die nachfolgende Wirkstoffkopplung an die Fettalkylethylesteramide und - ethylterephthalato-etheramide zu schaffen. Der präparative Weg dafür war die Überführung der olefinischen Doppelbindungen der Fettalkylsäurereste in Oxiranfunktionen (Epoxide), da sie insbesondere befähigt sind, durch nukleophile Ringöffnung mit Hydroxylgruppen oder NH-Funktionen, welche in den projektgemäß ausgewählten Wirkkomponenten vorhanden sind, chemische Bindungen einzugehen.
Die Herstellung von Epoxiden aus den präparierten Zwischenverbindungen wurde in Anlehnung und Abwandlung von Literaturangaben vorgenommen. Sie gelang durch Oxidation der Olefine mit Wasserstoffperoxid und Peroxosäuren. Für die Epoxidierung der eingesetzten Fettsäuren war vor allem Peroxiessigsäure als Oxidationsmittel von Vorteil, da die Fettsäurederivate im Gegensatz zur Anwendung von Wasserstoffperoxid glatt durchoxidiert wurden und die Umsetzungen in nichtwässeriger Phase ausführbar waren. Geeignete Reaktionsbedingungen für die Oxidationen der Substanzen waren Temperaturführungen um 25 °C und Verwendung der wasserfreien Lösungsmittel Essigsäure oder Chloroform. Die Reaktionszeiten betrugen 1 bis 3 Std., vorwiegend bedingt einerseits durch die langsame Peroxidzugabe und andererseits für das Erreichen vollständiger Umsetzungsgrade.
Die epoxidierten Zwischenprodukte wurden durch DSC-Messungen, sofern Feststoffe vorlagen, und Elementaranalysen charakterisiert. Daneben wurde der Umsetzungsgrad der Epoxidierung indirekt durch Bestimmung der Jodzahl (Vollständige Epoxidierung hatte eine theoretische Jodzahl von 0 zur Folge) verfolgt.

Für die präparative Darstellung der Epoxidierungsprodukte konnten folgende Synthesevorschriften erarbeitet werden:

### 9,10-Epoxystearinsäure-ε-ACS-ethylesteramid:

21,93 g (0,05 mol) Ölsäure-ε-ACS-ethylesteramid (1) werden in 60 ml getrocknetem Chloroform gelöst und auf 25 °C temperiert. Bei Temperaturkonstanz werden unter Rühren 13,6 g (0,07 mol) Peroxyessigsäure (39%) langsam zugetropft, sodass die Innentemperatur der Reaktionsmischung nicht über 28 °C ansteigt. Nach der Zugabe wird noch 3 Std. bei 25 °C weitergerührt, danach dieTemperatur auf 30 °C gestellt und mittels Anlegen von Vakuum das Chloroform langsam abdestilliert, bis das zurückbleibende Produkt weiß und breiig wird. Danach wird abgekühlt, das Rohprodukt mit 100 ml getrocknetem Aceton gut durchgeührt und über Nacht im Kühlschrank stehen gelassen. Am nächsten Tag wird der weiße Niederschlag abfiltriert und bei Raumtemperatur im Vakuum getrocknet.

| | | | |
|---|---|---|---|
| Ausbeute: 18 g (80 %) | | Jodzahl: 0,8 | |
| Elementaranalyse: | C: 68,72% | H: 11,86 % | N: 5,84 % |

### 9,10-Epoxystearinsäure-tris ε-ACS-ethylesteramid:

16,63 g (0,025 mol) Ölsäure-tris ε-ACS-ethylesteramid (3) werden in 60 ml getrocknetem Chloroform gelöst und auf 25 °C temperiert. Bei Temperaturkonstanz werden unter Rühren 6,8 g (0,035 mol) Peroxyessigsäure (39%) langsam so zugetropft, dass die Innentemperatur der Reaktionsmischung nicht über 28 °C ansteigt. Nach der Zugabe wird noch 3 Std. bei 25 °C weitergerührt, danach die Temperatur auf 30 °C angehoben und unter Vakuum das Chloroform langsam abdestilliert Es bleibt ein emulsionsartiges Reaktionsgemisch zurück, das mit 100 ml getrocknetem Aceton aufgeschwemmt wird. Danach wird über Nacht im Kühlschrank stehen gelassen. Am nächsten Tag wird das Produkt mittels Filterpapier abfiltriert und dann bei Raumtemperatur im Vakuum getrocknet.

| | | | |
|---|---|---|---|
| Ausbeute: 16,5 g (96 %) | | Jodzahl: 0,5 | |
| Elementaranalyse: | C: 66,87% | H: 11,00 % | N: 7,05 % |

### 10,11-Epoxiundecansäure-ε-ACS-ethylesteramid:

17,03 g (0,05 mol) Undecensäure-ε**-**ACS-ethylesteramid (6) werden in 60 ml getrocknetem Chloroform gelöst und auf 25 °C temperiert. Danach werden 13,6 g (0,07 mol) Peroxyessigsäure (39%) zugetropft. Nach der Zugabe wird noch 3 Std. bei 25 °C weitergerührt, danach das Gemisch auf eine Mischung Eis/Wasser 1:1 geben und die organische Phase im Scheidetrichter abgetrennt. Das Chloroform wird bei 30 °C auf dem Wasserbad im Vakuum entfernt, der Rückstand mit CaCl₂ getrocknet und filtriert.

| | | | |
|---|---|---|---|
| Ausbeute: 16 g (87 %) | | Jodzahl: 0,7 | |
| Elementaranalyse: | C: 63,16% | H: 12,18 % | N: 6,74 % |

### 10,11-Epoxyundecansäure-bis-ε-ACS-ethylesteramid:

22,68 g (0,05 mol) Undecensäure-bis-ε-ACS-ethylesteramid (7) werden in Chloroform gelöst und dazu bei 25 °C eine Lösung aus 12 g (0,061 mol) Peroxyessigsäure (39%) und 30 ml Eisessig langsam zugetropft. Es wird 3 Std. bei weiter gerührt, danach das das Chloroform im Vakuum abdestilliert. Die verblei-bende weiche Masse wird mit ca. 30 ml Methanol versetzt, unter Erwärmen gut durchmischt und danach über Nacht im Kühlschrank aufbewahrt. Die dickflüssige Aufschlämmung wird dann filtriert und im Vakuum getrocknet.

| | | | |
|---|---|---|---|
| Ausbeute: 22,6 g (95 %) | | Jodzahl: 0,7 | |
| Elementaranalyse: | C: 65,95% | H: 11,79 % | N: 6,74 % |

### 10,11-Epoxyundecansäure-tris-ε-ACS-ethylesteramid:

14,17 g (0,025 mol) Undecensäure-tris-ε-ACS-ethylesteramid (8) werden in Chloroform gelöst und bei 25 °C 6,8 g (0,035 mol) Peroxyessigsäure (39%) langsam zugetropft. Es wird 3 Std. weiter gerührt, danach das das Chloroform im Vakuum abdestilliert. Die verbleibende weiche Masse wird mit ca. 30 ml Methanol versetzt, unter Erwärmen gut durchmischt und danach über Nacht im Kühlschrank aufbewahrt. Die dickflüssige Aufschlämmung wird dann filtriert und im Vakuum getrocknet.

| | | | |
|---|---|---|---|
| Ausbeute: 13,6 g (93 %) | | Jodzahl: 0,5 | |
| Elementaranalyse: | C: 63,94% | H: 9,50 % | N: 9,24 % |

### 9,10-Epoxybehensäure-ε-ACS-ethylesteramid:

Zu 24,74 g (0,05 mol) Erucasäure-ε-ACS-ethylesteramid (11) in 60 ml Chloroform gelöst werden eine Mischung aus 13,6 g (0,07 mol) Peroxyessigsäure (39%) und 10 ml Chloroform bei 25 °C langsam zugetropft, sodass die Innentemperatur der Reaktionsmischung nicht über 28 °C ansteigt. Nach der Zugabe wird weitere 3 Std. weitergerührt, danach das Gemisch auf ca. 100 g Eis gegossen. Das feste Produkt wird mit Eiswasser neutral gewaschen, filtriert und bei Raumtemperatur im Vakuum getrocknet.

| | | | |
|---|---|---|---|
| Ausbeute: 21,3 g (83 %) | | Jodzahl: 0,4 | |
| Elementaranalyse: | C: 70,30% | H: 12,84 % | N: 5,27 % |

### 9,10-Epoxybehensäure-tris-ε-ACS-ethylesteramid:

18,02 g (0,025 mol) Erucasäure-ε-ACS-ethylesteramid (13) werden in 60 ml Chloroform gelöst und zu dieser Mischung 6,8 g (0,035 mol) Peroxyessigsäure (39%) langsam zugegeben. Die Temperatur der Reaktionsmischung soll während der Peroxidzugabe nicht über 30 °C ansteigen. Nach der Oxidation wird noch 3 Std. bei 25 °C weitergerührt, danach das Chloroform bei 30 °C im Vakuum abgezogen. Es fällt ein cremiges, gelbes Produkt an, das mit ca. 80 ml Aceton aufgeschwemmt wird. Die Aufschwemmung wird im Eis abgekühlt, worauf sich ein grobkristalliner Niederschlag bildet. Es wird filtriert und bei Raumtemperatur im Vakuum getrocknet.

| | | | |
|---|---|---|---|
| Ausbeute: 16,5 g (89 %) | | Jodzahl: 0,6 | |
| Elementaranalyse: | C: 67,51% | H: 10,43 % | N: 7,08 % |

### 1,2-Etylen-bis-(9,10-epoxi-oleamid) :

29,45 g (0,05 mol) 1,2-Ethylen-bis-oleamid werden in 60 ml Chloroform gelöst und auf 25 °C temperiert. Dazu werden 21,5 g (0,11 mol) Peroxyessigsäure (39%) langsam so zugetropft, dass der Temperaturanstieg des Reaktionsgemisches nicht mehr als 5 °C beträgt. Nach der Oxidationszeit von 3 Std. werden zu der gelblichen, klaren Lösung 100 ml Aceton gegeben, worauf in der Kälte das Produkt als kristalliner Niederschlag ausfällt. Es wird filtriert, mit wenig Aceton nachgewaschen und bei Raumtemperatur im Vakuum getrocknet.

| | | | |
|---|---|---|---|
| Ausbeute: 24,7 g (80 %) | | Jodzahl: 1,7 | |
| Elementaranalyse: | C: 71,85% | H: 10,25 % | N: 4,68 % |

### 2,2'-Bis-(oxyethylterephthalato)-9,10-epoxystearinsäureamid

22,3 g 2,2'-Bis-(oxyethylterephthalato)-ölsäureamid (0,0025 mol) werden in 60 ml Chloroform aufgeschwemmt und unter Rühren bei 25 °C mit 6,8 g Peroxyessigsäure (39%) umgesetzt. Es wird 3 Stunden gerührt und ein Teil des Chloroforms abdestilliert. Der Rückstand wird mit Aceton vernetzt, das Gemisch über Nacht in der Kälte belassen und dann filtriert.
Ausbeute: 15 g
Mach der gleichen Vorgehensweise lassen sich die Produkte auf Basis von 10-Undecensäure und Erucasäure epoxidieren.

### Wirkstoffkopplung:

Die chemische Verknüpfung ausgewählter Wirksubstanzen mit den Kopplungsprodukten aus Migrations- und Ankersegmenten erfolgte durch Umsetzungen der Wirkstoffe über ihre funktionellen Gruppen an den Oxiranfunktionen der Kopplungssubstanzen. Die Erarbeitung geeigneter Arbeitsvorschriften basierte auf Nutzung und Verifizierung relevanter Literaturangaben, in denen Epoxide mit phenolischen und aliphatischen Hydroxylgruppen umgesetzt wurden.

Für die präparative Darstellung einiger Additive konnten folgende Synthesevarianten erarbeitet werden:

### Kopplung von 9,10-Epoxysteaxinsäure-ε-ACS-ethylesteramid mit IRGANOX 245

11,4 g (0,025 mol) 9,10-Epoxystearinsäure-ε-ACS-ethylesteramid (16) und 17,6 g IRGANOX 245 werden nacheinander in 60 ml getrocknetem DMAC unter leichtem Erwärmen gelöst. Unter weiterem Erhitzen wird bei 70 °C 1,16 g festes Natriumhydroxid in kleinen Portionen zugegeben. Nach der NaOH-Zugabe wird weiter auf 100 °C erwärmt und 3 Std. bei dieser Temperatur unter Stickstoff gerührt. Nach dem Abkühlen wird das Reaktionsgemisch auf Eis gegossen, der helle Niederschlag filtriert und bei Raumtemperatur im Vakuum getrocknet. Ausbeute: 25 g (86 %) HPLC: 2:48 und 1:68 min (Retentionszeiten)

### Kopplung von 9,10-Epoxystearinsäure-tris ε-ACS-ethylesteramid mit IRGANOX 1098

17,02 g (0,025 mol) 9,10-Epoxystearinsäure-tris-ε-ACS-ethylesteramid (18) und 19,11 g (0,03 mol) IRGANOX 1098 werden in DMAC unter Stickstoff und Rühren gelöst, danach werden 1,16 g (0,029 mol) feste NaOH portionsweise eingetragen. Das Reaktionsgemisch wird auf 100 °C erwärmt und dann 3 Std. gerührt. Nach dem Abkühlen wird auf Eis gegossen, wobei ein feinkristalliner Niederschlag ausfällt. Er wird abfiltriert, mit Wasser gewaschen und bei Raumtemperatur im Vakuum getrocknet.

| | |
|---|---|
| Ausbeute: 27 g (75 %) | HPLC: 3:28 min |

DSC: 130 °C (IRGANOX 1098: 161 °C)

### Kopplung von 10,11-Epoxyundecansäure-tris-ε-ACS-ethylesteramid mit TINUVIN 234

14,57 g (0,025 mol) 10,11-Epoxyundecansäure-tris-ε-ACS-ethylesteramid (23) und 13,43 g (0,03 mol) TINUVIN 234 werden zu 60 ml getrocknetem DMAC gegben und das Gemisch auf 80 °C erwärmt. Oberhalb von 80 °C erfolgt die portionsweise Zugabe von 1,16 g (0,029 mol) NaOH, danach wird auf 100 °C aufgeheizt. Nach 3 Std. wird die Mischung auf Eis gegossen, mit verdünnter Salzsäure neutralisiert und über Nacht im Kühlschrank aufbewahrt. Danach wird abgenutscht, mit Wasser gewaschen und im Vakuum getrocknet.

| | |
|---|---|
| Ausbeute: 20 g (71 %) | HPLC:1:38 und 3:58 min |

### Kopplung von 9,10-Epoxybehensäure-ε-ACS-ethylesteramid mit TINUVIN 234

12,77 g (0,025 mol) 9,10-Epoxybehensäure-ε-ACS-ethylesteramid (26) und 13,43 g (0,03 mol) TINUVIN 234 werden in DMAC gelöst, unter Rühren und Stickstoff werden in kleinen Portionen bei 70 -80 °C 1,16 g (0,029 mol) NaOH zudosiert und das Gemisch 3 Std. bei 100 °C temperiert. Anschließend wird abgekühlt und auf Eis gegossen, wobei ein heller Niederschlag ausfällt. Die überstehende Flüssigkeit wird neutralisiert, abfiltriert und das Produkt nach Wäsche bei Raumtemperatur im Vakuum getrocknet.

| | |
|---|---|
| Ausbeute: 19 g (72 %) | HPLC: 1:35 und 3:60 min |

### Kopplung von 9,10-Epoxybehensäure-tris-ε-ACS-ethylesteramid mit IRGANOX 1010

Nacheinander werden 9,21 g (0,0125 mol) 9,10-Epoxybehensäuretris-ε-ACS-ethylesteramid (28) und 17,67 g (0,015 mol) IRGANOX 1010 in 30 ml DMAC unter Erwärmen gelöst, danach werden 0,56 g (0,014 mol) NaOH eingetragen und die Mischung auf 100 °C erwärmt. Nach 3-stündigem Rühren wird auf Eis abgekühlt, das Gemisch mit verdünnter Salzsäure neutralisiert und der helle Niederschlag durch Wasserwäsche, Filtration und Vakuumtrocknung gewonnen.

| | |
|---|---|
| Ausbeute: 18 g (67 %) | HPLC: 1:63 und 2:53 min |

DSC: 68 °C (IRGANOX 1010: 112 °C)

### Verarbeitungsversuche und Filamenterzeugung

Die Gewinnung von Versuchsmaterialien auf Basis von Polyamid 6 und den hergestellten Additiven erfolgte durch Schmelzeverarbeitung auf verschiedenen Extrusionsanlagen.
Als polymeres Ausgangsmaterial wurde Ponamid Typ BS 300 der Fa. Plastomid GmbH (Guben) eingesetzt, das uns in Versuchsmengen auch unstabilisiert zur Verfügung gestellt werden konnte.

Die Zumischung der Additive wurde so vorgenommen, dass die modifizierten Stabilisatoren mit geringen Mengen eines leicht flüchtigen und inerten Lösungsmittels aufgenommen, den spinnfertig getrockneten PA 6, PA6.6, PET bzw. PBT als Suspension zugegeben und zusätzlich im Trommeltrockner homogenisiert wurden. Anschließend wurde das Lösungsmittel vollständig entfernt.
Die Erzeugung von PA-Folien erfolgte auf einem Miniextruder der Fa. Randcastle Extrusion Systems (New Jersey). Die Anlage verfügt über eine ½-Zoll-Extruderschnecke und ist mit einer Schlitzdüse der Abmessungen 2 Zoll Breite und 100 µm Schlitzdicke ausgerüstet. Die jeweiligen Spinnbedingungen und Schmelzetemperaturen wurden den Zumischungen angepaßt. In allen verarbeiteten Materialvarianten konnten Versuchsprodukte für analytische Untersuchungen gewonnen werden.
Die Herstellung von Formkörpern und Normprüfkörpern erfolgte aus additivierten Granulaten durch Extrusion auf einer Spritzgießmaschine der Fa. Arburg. Die Zumischung der Additive und Granulierung konnte durch Verarbeitung auf einem Zweischneckenextruder ZSK 40 vorgenommen werden. Die Zumischung der Additive betrug 0,1 - 0,6 Masseprozent, vorzugsweise 0,5 Masseprozent.
Die Spinnversuche zur Herstellung textiler Filamente aus den additivierten Polymer-Materialien wurden auf einem Hochtemperatur-Spinntester der Fa. Fourne Polymertechnik GmbH Alfter-Impekoven durchgeführt. Die modifizierten Materialien wurden in einem Hopper dem Extruder vorgelegt, in diesem aufgeschmolzen und die gebildete Schmelze homogenisiert. Über eine beheizte Schmelzeleitung wurde die Schmelze dem Spinnkopf zugeführt, dort mittels einer Zahnradpumpe dosiert, durch ein Düsenpaket gedrückt und durch Abkühlung zu Fäden verformt. Die Abkühlung erfolgte durch Anblasen mit laminar strömender und klimatisierter Luft (Temp. 18,0 °C, rel. Feuchte 60-65 %). Am Ende der Abkühlstrecke wurde auf die verschiedenen Filamente eine wäßrige Öl-in-Wasser-Präparation zur Verbesserung des Fadenschlusses aufgetragen.

Für die Charakterisierung der modifizierten Polymer- Filamente, - Folien oder - Formkörper unter dem Aspekt des Nachweises und der Relativierung unterschiedlicher Wirksamkeiten der Additive wurden
- Belichtungsversuche im Suntest
- Untersuchungen zum Abbaugrad durch Viskositätsmessungen nach Belichtung und
- Bewitterungsversuche im Xenotest
- Benetzungsversuche (Hydrophobie/Hydrophilie)
- Untersuchung zur antibakteriellen Schutzfunktion (Agar-Diffusionstest) durchgeführt.

Die Belichtungen der Filamentgarne erfolgten im Suntest-Gerät der Firma Heraeus für bis zu 200 Stunden. Dabei entsprach die spektrale Energieverteilung der einer Außenbelichtung, die über Xenon-Brenner und UV-Filter mit Absorptionskante bei ca. 300 nm realisiert wurden. Die auf die Probe auftreffende Globalstrahlung betrug 765 w/m² bei einer Luft-Temperatur von ca. 45°C.

Die belichteten Filamente und Formkörper wurden dann für Untersuchungen zur Erfassung des Polymerabbaus über die Bestimmung der relativen Lösungsviskositäten (LV) ηᵣₑₗ verwendet. Die LV kann als Meßgröße für eine Bewertung der durchschnittlichen Polymermolmasse von Polyamiden und Polyesternherangezogen werden und ergibt sich aus dem Quotienten der kapillaren Durchlaufzeiten einer Polymerlösung und des Lösungsmittels. Ihre Bestimmung erfolgte mittels Ubbelohde-Viskosimeter (Kapillare II für Polyamid und Kapillare Ic für Polyester bei 25 °C in Schwefelsäure bzw. Dichlorbenzen/Phenol bei einer Konzentration von 1 g Polymer in 100 ml Lösungsmittel.

Desweiteren wurden Filamentgarne 300 Stunden in einem Xenotestgerät Alpha HE der Fa. Atlas entsprechend der in der DIN EN ISO 4892-2 festgelegten experimentellen Bedingungen

| | |
|---|---|
| - Filter Xenochrom 300 (entspricht Sonnenstrahlung im Freien) | |
| - Schwarzstandard-Temperatur: | 65°C |
| - Probenraumtemperatur: | 40°C |
| - relative Luftfeuchtigkeit: | 65% |
| - Bestrahlungsstärke (300-400 nm) : | 80 W/m² im Gleichlauf |
| - Phasen: | 18 min Regen / 102 min Trocken |

bewittert, daran anschließend ihre textil-physikalischen Eigenschaften an einem Tiratest der Fa. Prüfgeräte Rauenstein DIN-gerecht bestimmt und den Prüfergebnissen vor der Bewitterung gegenübergestellt.

Die Belichtungen im Suntest wurden insgesamt 200 Stunden für alle Versuchsmaterialien durchgeführt.

Ein anschaulicheres Bild über die Abbauprozesse bzw. zur Charakterisierung und differenzierten Bewertung der Wirksamkeit von Lichtstabilisator ergaben die experimentellen Daten der LV-Messungen in der Tabelle 3.

Nach der 100-stündigen Belichtungszeit wurde in dem unstabilisierten Referenzmaterial 1 bereits ein deutlicher Polymerabbau durch eine LV-Abnahme um 0,6 Einheiten festgestellt. In den vier nach gleicher Belichtungsdauer untersuchten Materialien mit modifizierten Stabilisatoren waren die Abbauprozesse weniger weit fortgeschritten. Hier nahm die LV nur um 0,2 bis 0,4 Einheiten ab, was mit einer erhöhten Stabilisatorwirkung der Additive im Vergleich zur ausgewählten Referenz einhergeht. Dieser Trend wurde auch anhand der anderen Werte in Tabelle 3 nach 200-stündiger Suntestbelichtung bestätigt:

**Tabelle 3: Übersicht der Ergebnisse zur Bestimmung der relativen Lösungsviskositäten ηᵣₑₗ nach Belichtung im Xenotest**

| **Produkt-Nr.** | **Relative Lösungsviskosität ηᵣₒₗ (LV)** | | | |
|---|---|---|---|---|
| | unbelichtet | Nach 100 Std. Suntest | Nach 200 Std. Suntest | Differenz zum Ausg.-wert |
| Referenzproben | | | | |
| **REF 1** | 2,83 | 2,20 | 1,76 | 1,07 |
| **REF 2** | 2,78 | - | 1,96 | 0,82 |
| **REF 3** | 2,81 | - | 1,88 | 0,93 |
| **55** | 2,80 | - | 1,69 | 1,11 |

| Versuchsprodukte mit IRGANOX 245 | | | | |
|---|---|---|---|---|
| **31** | 2,88 | - | 2,20 | 0,68 |
| **35** | 2,80 | - | 2,29 | 0,51 |
| **39** | 2,89 | - | 2,21 | 0,68 |
| **40** | 2,84 | - | 2,26 | 0,58 |
| **41** | 2,78 | - | 2,39 | 0,39 |
| **42** | 2,87 | - | 2,34 | 0,53 |
| **46** | 2,84 | 2,45 | 2,17 | 0,67 |
| **50** | 2,80 | - | 2,53 | 0,27 |
| **51** | 2,88 | - | 2,54 | 0,34 |

| Versuchsprodukte mit IRGANOX 1098 | | | | |
|---|---|---|---|---|
| **32** | 2,90 | 2,74 | 2,57 | 0,33 |
| **37** | 2,88 | - | 2,54 | 0,34 |
| **44** | 2,86 | - | 2,68 | 0,18 |
| **48** | 2,87 | 2,65 | 2,51 | 0,36 |
| **53** | 2,85 | - | 2,26 | 0,59 |
| **58** | - | - | - | - |

| Versuchsproducte mit IRGANOX 1010 | | | | |
|---|---|---|---|---|
| **33** | 2,88 | 2,57 | 2,24 | 0,64 |
| **36** | 2,85 | - | 2,49 | 0,36 |
| **43** | 2,88 | - | 2,46 | 0,42 |
| **47** | 2,91 | - | 2,42 | 0.49 |
| **52** | 2,90 | - | 2,40 | 0,50 |
| **57** | | - | - | - |

| Versuchsprodukte mit TINUVIN 234 | | | | |
|---|---|---|---|---|
| **34** | 2,83 | - | 2,32 | 0,51 |
| **38** | 2,84 | - | 2,37 | 0,47 |
| **45** | 2,84 | - | 2,36 | 0,48 |
| **49** | 2,82 | - | 2,65 | 0,17 |
| **54** | 2,82 | - | 2,52 | 0,30 |
| **59** | - | - | - | - |

Die LV-Abnahmen der vier Referenzmateriallen lagen gegenüber allen projektgemäß mit modifizierten Stabilisatoren additivierten PA 6- Materialien höher und betrugen zwischen 0,82 und 1,11 LV-Einheiten. Wie erwartet war der Abbau bei der unstabilisierten Probe 1 und dem mit Phenol als unwirksame Stabilisatorreferenz modifizierten Produkt 55 am weitesten fortgeschritten.
Dagegen wiesen sämtliche mit den entwickelten Versuchsprodukten stabilisierten Filamente und Folien niedrigere Abbaustadien auf. Hier betrugen die LV-Differenzen zwischen Ausgangswert und Versuchsende 0,17 bis 0,68 LV-Einheiten.
Für differenziertere Bewertungen der Wirksamkeiten der aus strukturell unterschiedlichen Einzelsubstanzen aufgebauten Wirkstoffadditiven muß auch berücksichtigt werden, dass in dem zusammengesetzten Eigenschaftsspektrum aus Migrationskomponente-Ankersegment-Stabilisator die chemische Struktur des gekoppelten Stabilisators selbst einen Einfluß auf die Migrationseigenschaften in den Polymeren hat.
In den mit IRGANOX 245 modifizierten Additiven kam es zu LV-Abstufungen mit Differenzen zum PA 6-Ausgangsniveau zwischen 0,27 und 0,68 LV-Einheiten. Hochstabil im Sinne der Zielstellung waren Additive, in denen das Ciba-Produkt mit Erucasäure als Migrationselement und den in ihrer Wirkung als Ankersegment höher einzustufenden Bis- und Tris-ε-Aminocapronsäuren verknüpft war. Die LV-Verluste waren nur gering und die Filamente wiesen nach der Belichtung noch ein LV-Niveau von > 2,50 auf, was aus verarbeitungstechnischer Sicht kaum Nachteile mit sich bringt und anwendungsorientiert vorteilhaft ist.
Für die Modifizierung von IRGANOX 1098 erwies sich die Kombination mit Undecensäure und der trimeren Aminocapronsäure als hochwirksame Stabilisatorzusammenstellung. Hier wurde nur eine geringfügige Abnahme der LV von 2,86 auf 2,68 nach der Belichtung festgestellt. Offenbar ergänzen sich hier die Eigenschaften des Stabilisators mit denen des auf Grund der kürzesten aliphatische Kette schwächsten Migrationsmoleküls Undecensäure und des stärksten Ankersegmentes zu einer wirkungsvollen Zusammenstellung des Additives.

In Filamenten mit IRGANOX 1010-Stabilisator wurden insgesamt keine größeren Unterschiede in den Abbauvorgängen gefunden. Das LV-Niveau der Versuchsprodukte lag zwischen 2,24 und 2,49. Das Additiv mit Ölsäure und trimerer ACS war am wenigsten abgebaut.
In der Gruppe der Versuchsprodukte mit TINUVIN 234 wurde mit der Verknüpfung von Erucasäure und ε-ACS ebenfalls eine hochwirksame Stabilisatorkombination gefunden. Nach der 200-stündigen Belichtung wurde in dem Material (49) noch eine LV von 2,65 gemessen. Dieser Stabilisator entfaltet seine größte Wirkung bei der Kopplung mit dem am stärksten migrationsfähigen Addukt: Längste aliphatische Kette der Fettalkylsäure/ kürzestes Ankersegment.

In parallelen Versuchen zur Charakterisierung der Stabilisatorwirkung der Versuchsmaterialien wurden eine Serie von Filamenten 300 Stunden im Xenotest entsprechend der oben genannten experimentellen Bedingungen bewittert und dann hinsichtlich Reißfestigkeit und Reißdehnung geprüft. Als Kriterium für eine Beurteilung der Stabilisierung bzw. des Polymerabbaues wurde das Bewitterungsverhältnis als Quotient der Reißkräfte nach und vor der Behandlung in % angegeben. Prüfungen erfolgten nach 150 und 300 Stunden Bewitterung.
Die Ergebnisse dieser Untersuchungen sind in der Tabelle 4 zusammengestellt. Sie enthält zusätzlich am Tabellenende LV-Differenzen aus den Versuchen der Suntestbelichtungen analoger Versuchsprodukte, die zur Charakterisierung polymerabbauender Vorgänge herangezogen wurden und gut mit den Ergebnissen der Xenotestversuchsreihen korrelieren:

**Tabelle 4: Veränderung der Faserparameter nach 150/ 300 Std. Bewitterung im Xenotest im Vergleich zu den Ausgangswerten**

| | **Versuchsmaterial** | | | | | | | | |
|---|---|---|---|---|---|---|---|---|---|
| **Parameter** | **31** | **33** | **32** | **34** | **38** | **45** | **49** | **54** | **REF** |
| **Ausgangsniveau ohne Bewitterung** | | | | | | | | | |
| Feinheit (tex) | 9,35 | 12,82 | 12,75 | 11,78 | 12,61 | 11,84 | 1,96 | 12,72 | 12,85 |
| Reißkraft (N) | 4,02 | 4,41 | 4,47 | 3,87 | 4,24 | 3,99 | 3,73 | 3,78 | 3,84 |
| Standardabw. (N) | 0,47 | 0,26 | 0,68 | 0,35 | 0,46 | 0,34 | 0,37 | 0,29 | 0,25 |
| Variationskoeffizient (%) | 11,8 | 5,94 | 15,2 | 9,17 | 10,8 | 8,63 | 9,88 | 7,73 | 6,42 |
| Reißdehnung (%) | 62,0 | 62,4 | 54,8 | 45,8 | 58,9 | 53,0 | 60,5 | 56,7 | 58,0 |
| Standardabw. (%) | 13,17 | 6,28 | 16,71 | 7,24 | 8,18 | 8,45 | 9,17 | 7,54 | 9,20 |
| Variationskoeffizient (%) | 21,2 | 10,1 | 30,5 | 15,8 | 13,9 | 15,9 | 15,2 | 13,3 | 15,9 |

| **nach 150 Std. Bewitterung** | | | | | | | | | |
|---|---|---|---|---|---|---|---|---|---|
| Reißkraft (N) | 2,39 | 2,87 | 3,61 | 3,17 | 2,87 | 3,22 | 3,25 | 3,23 | 3,12 |
| Standardabw. (N) | 0,40 | 0,34 | 0,74 | 0,40 | 0,35 | 0,27 | 0,25 | 0,21 | 0,24 |
| Variationskoeffizient (%) | 16,78 | 11,89 | 20,41 | 12,45 | 12,38 | 8,43 | 7,76 | 6,54 | 7,74 |
| Reißdehnung (%) | 34,9 | 29,8 | 31,6 | 35,4 | 32,8 | 42,1 | 46,1 | 49,0 | 47,4 |
| Standardabw. (%) | 9,6 | 3,77 | 4,9 | 6,69 | 5,45 | 8,58 | 8,71 | 5,42 | 7,74 |
| Variationskoeffizient (%) | 24,49 | 12,66 | 15,51 | 18,88 | 16,61 | 20,37 | 18,89 | 11,07 | 16,32 |
| **Bewitterungsverhältnis Reißkraft (%)** | **59,4** | **65,1** | **80,8** | **81,9** | **67,7** | **80,7** | **87,1** | **85,4** | **81,2** |

| | **Versuchsmaterial** | | | | | | | | |
|---|---|---|---|---|---|---|---|---|---|
| **Parameter** | **31** | **33** | **32** | **34** | **38** | **45** | **49** | **54** | **REF** |
| **nach 300 Std. Bewitterung** | | | | | | | | | |
| Reißkraft (N) | 1,56 | 1,92 | 2,25 | 2,21 | 1,57 | 1,82 | 2,66 | 2,11 | 2,38 |
| Standardabw. (N) | 0,12 | 0,25 | 0,29 | 0,08 | 0,12 | 0,37 | 0,23 | 0,38 | 0,26 |
| Variationskoeffizient (%) | 7,8 | 12,98 | 12,96 | 3,52 | 7,68 | 20,24 | 8,50 | 18,18 | 10,98 |
| Reißdehnung (%) | 16,9 | 17,1 | 18,5 | 19,4 | 15,3 | 18,5 | 31,6 | 21,3 | 27,0 |
| Standardabw. (%) | 1,42 | 1,61 | 1,88 | 1,27 | 0,80 | 4,21 | 4,29 | 6,91 | 5,39 |
| Variationskoeffizient (%) | 8,41 | 9,39 | 10,21 | 6,51 | 5,22 | 22,78 | 13,57 | 32,48 | 19,99 |
| **Bewitterungsverhältnis Reißkraft (%)** | **38,8** | **43,5** | **50,3** | **57,1** | **37,0** | **45,6** | **71,3** | **55,8** | **62,0** |
| LV-Differenz | 0,68 | 0,64 | 0,33 | 0,51 | 0,47 | 0,48 | 0,17 | 0,30 | 0,93 |

Die Ergebnisse der Xenotest-Bewitterungsversuche lassen über die Reißkraftmessungen ebenfalls differenzierbare Bewertungen der Stabilisator-wirkungen der Additive zu. Die als Vergleichsvariante geprüfte Referenz 3 zeigte nach 150 Stunden Bewitterung einen Reßkraftverlust von 19 %, der nochmals um den gleichen Betrag nach der 300-stündigen Behandlung abfiel und zu einem Bewitterungsverhältnis der Reißkraft von 62 % führte. In der gleichen Größenordnung wurden die Versuchsmaterialien 32, 34 und 54 geprüft. Mit einem Bewitterungsverhältnis von 71,3 % erwies sich die Variante 49 wiederum als hochwirksam und erreichte einen um 9 % besseren Wert gegenüber der Referenz. Sie enthielt das Kopplungsprodukt aus Erucasäure mit ε-Aminocapronsäure und TINUVIN 234.

Eine vergleichende Betrachtung der Bewitterungsergebnisse mit denen der LV-Messungen ergab eine gute Übereinstimmung hinsichtlich der Bewertbarkeit der Stabilisatorwirksamkeiten. Versuchsmaterialien, in denen LV-Differenzen von über 0,5 bis 0,6 Einheiten gemessen wurden, waren analog auch niedrigere Bewitterungs-verhältnisse zu verzeichnen. Betrug die LV-Abnahme weniger als 0,3 Punkte war eine verbesserte Stabilisierung der Materialien im Vergleich zu den Referenzen ermittelt worden. Neben den Produkten 44 und 50 sowie der bereits hervorgehobenen Probe 49 fiel in dieser Hinsicht besonders das Produkt 54, ebenfalls eine TINUVIN-Modifizierung, als weitere Positivvariante auf.

Insgesamt konnten auf der Basis dieser Versuchsergebnisse Optimalvarianten für Verknüpfung der getesteten Stabilisatoren mit vorteilhaften Migrationseigenschaften abgeleitet werden. Ihre Polyamid-stabilisierende Wirkungen waren in den nachfolgend aufgeführten Modifikationen deutlich höher als die getesteten Referenzmaterialien (siehe Tabelle 5):

**Tabelle 5:**

| Produkt | Stabilisator | Migrationskomponente | Ackersegment | LV-Differenz |
|---|---|---|---|---|
| 50 | IRGANOX 245 | Erucasäure | Bis-ε-ACS | 0,27 |
| 51 | IRGANOX 245 | Erucasäure | Tris-ε-ACS | 0,34 |
| 44 | IRGANOX 1098 | Undecensäure | Tris-ε-ACS | 0,18 |
| 36 | IRGANOX 1010 | Ölsäure | Tris-ε-ACS | 0,36 |
| 49 | TINUVIN 234 | Erucasäure | ε-ACS | 0,17 |
| 54 | TINUVIN 234 | Erucasaüre | Tris-ε-ACS | 0,30 |
| Rerenz | Konv. Stab. | - | - | 0,8-0,9 |

Es wurden spezielle Untersuchungen zum Nachweis und des Verteilungszustandes der modifizierten Additive und Stabilisatoren durchgeführt. Einbezogen wurden naßchemische Analysenmethoden zur quantitativen Erfassung einzelner Substanzen wie auch physikalische und spektroskopische Meßverfahren sowie Farbstoffsorptionsmessungen aus Polyamidanfärbungen.

Begonnen wurde mit Versuchen zur Ermittlung der Migrationsfähigkeit einiger Kopplungsprodukte, die aus Fettalkylsäurederivaten und Aminocapronsäuren aufgebaut waren, über Jodzahltitrationen olefinischer Doppelbindungen an verschiedenen Probekörpern. Für diese Untersuchungen wurden geeignete Versuchsmaterialien in Form von additivierten Granulaten, Folien und Filamenten in separaten Verarbeitungsversuchen hergestellt, in denen die zu bestimmenden olefinischen Doppelbindungen der zugesetzten Additive (vgl. Zwischenprodukte Tabelle 4) noch nicht durch Epoxidierung oder Stabilisatorkopplung blockiert waren.
Eine Übersicht der erfaßten Werte enthält die Tabelle 6.

**Tabelle 6: Jodzahlbestimmung an PA 6-Materialien mit Zusätzen von olefinischen Synthesezwischenprodukten**

| Matrix | Additiv lt. Tab. 4 | Additivgehalt (%) | Jodzahl Materialform: | | |
|---|---|---|---|---|---|
| | | | Filament | Folie | Granulat |
| PA 6 | ohne | - | 4,10 | 5,34 | 0,06 |
| PA 6 | 1 | 2 | 5,83 | 8,42 | 1,37 |
| PA 6 | 3 | 2 | 4, 98 | 9,01 | 0,73 |
| PA 6 | Bisoleamid | 2 | 5,95 | 8,09 | 0,88 |
| PA 6 | 1 | 5 | 7,65 | 9,39 | 2,63 |
| PA 6 | 3 | 5 | 7, 91 | 9,05 | 1,58 |
| PA 6 | Bisoleamid | 5 | 7,77 | 8,18 | 2,84 |
| PA 6 | 6 | 5 | 8,57 | 10,03 | 3,19 |
| PA 6 | 11 | 5 | 6,86 | 8,53 | 2,95 |
| PA 6 | 13 | 5 | 7,51 | 7,83 | 1,17 |
| PA 6 | 6 | 2 | 7,24 | 6,83 | 1,37 |
| PA 6 | 8 | 2 | 6,81 | 6,11 | 0,65 |
| PA 6 | 11 | 2 | 6,85 | 8,49 | 0,49 |
| PA 6 | 13 | 2 | 6,27 | 8,39 | 0,61 |

Die ermittelten Werte zeigten, daß eine erhöhte Anzahl von additivspezifischen Doppelbindungen im Oberflächenbereich der Proben im Vergleich zum unadditivierten PA 6 gefunden wurden und somit der Nachweis einer Oberflächenanreicherung der zur Modifizierung synthetisierten Grundstrukturen qualitativ erbracht werden konnte. Ersichtlich ist dies an den um 2 bis 5 Jodzahlen erhöhten Werten der Granulate, Folien und Filamente, wobei die erhöhten Werte mit den massespezifischen Oberflächen der jeweiligen Proben einhergingen.

## Patentansprüche

1. Verfahren zur dauerbeständigen Licht-, thermooxidativen, antibakteriellen, hydrophoben und/oder hydrophilen Stabilisierung von in der Schmelze verformbaren Polymeren aus der Gruppe Polyamid 6, Polyamid 6.6, Polyethylenterephthalat und Polybutylenterephthalat durch Zusatz eines Additivs vor dem Verarbeitungsprozeß der Polymere, **dadurch gekennzeichnet, daß** die Polymere mit einem Additiv vermischt werden, das stabilisierende Wirkkomponenten enthält, die mit für diese Polyamide oder Polyester polymerunverträglichen Migrationselementen und für das betreffende Polymer polymer-affinen oligomeren Ankersegmenten chemisch gekoppelt sind, wobei die Wirkkomponenten 2-Hydroxy-benzophenone oder sterisch gehinderte Amine oder Benzimidazole oder sterisch gehinderte Phenole oder Polyethylenglykole oder halogenierte, hydroxylgruppenhaltige Diphenylether sind.

2. Verfahren nach Anspruch 1, **dadurch gekennzeichnet, daß** die Migrationselemente aliphatische Fettalkylsäure-Derivate, bevorzugt Derivate der Ölsäure, der 10-Undecensäure oder der Erucasäure sind.

3. Verfahren nach mindestens einem der Ansprüche 1 bis 2, **dadurch gekennzeichnet, daß** die 2-Hydroxy-benzophenone über mindestens eine zusätzliche freie reaktionsfähige funktionelle Hydroxylgruppe, die Benzimidazole oder die halogenierten, hydroxylgruppenhaltigen Diphenylether jeweils über mindestens eine freie, reaktionsfähige Hydroxylgruppe und die sterisch gehinderten Amine über freie reaktionsfähige funktionelle Hydroxyl- oder Aminogruppen verfügen.

4. Verfahren nach mindestens einem der Ansprüche 1 bis 3, **dadurch gekennzeichnet, daß** die Migrationselemente Derivate der Ölsäure, Erucasäure oder 10-Undecensäure sind.

5. Verfahren nach mindestens einem der Ansprüche 1 bis 4, **dadurch gekennzeichnet, daß** als Ankersegmente Oligomere aus ε-Aminocapronsäure oder Oligomere aus Hexamethylendiamin und Adipinsäure eingesetzt werden.

6. Verfahren nach Anspruch 1 bis 4, **dadurch gekennzeichnet, daß** als Ankersegmente Oligomere aus Terephthalsäure oder Dimethylterephthalat und Ethylenglykol oder Oligomere aus Terephthalsäure oder Dimethylterephthalat und 1,4-Butylenglykol eingesetzt werden.

7. Verfahren nach mindestens einem der Ansprüche 2 und 4 bis 6, **dadurch gekennzeichnet, daß** die Kopplung der Migrationselemente mit den Ankersegmenten durch Umsetzung von 2-Oxazolinderivaten der Fettalkylsäuren mit freien Carboxyl-, Hydroxyl- oder Aminogruppen der oligomeren Ankersegmente erfolgt.

8. Verfahren nach mindestens einem der Ansprüche 1 bis 7, **dadurch gekennzeichnet, daß** die Kopplung der Wirkkomponenten an die/das Migrationselement(e) über die Umsetzung von freien Hydroxyl- oder Aminogruppen der Wirkstoffe mit epoxidierten olefinischen Bindungen der Fettalkylsäure erfolgt.

9. Verfahren nach mindestens einem der Ansprüche 1 bis 8, **dadurch gekennzeichnet, daß** das Additiv in einem Anteil von bis zu 5 Gew.-%, bevorzugt bis zu 1 Gew.-%, bezogen auf das Gewicht der Polymere, zugegeben wird.

10. Kunststoff-Filamente, -Formkörper oder -Folien aus in der Schmelze verformbaren Polymeren, die ein Additiv enthalten, das ihnen dauerbeständige Lichtstabilität, thermooxidative, antibakterielle, hydrophobe und/oder hydrophile Stabilität verleiht, **dadurch gekennzeichnet, daß** in dem Additiv Wirkkomponenten mit polymer-unverträglichen Migrationselementen und polymer-affinen Ankersegmenten gekoppelt sind, so dass sie sich in einer oberflächennahen Schicht der Kunststoff-Filamente, -Formkörper oder -Folien anreichern, wobei die Polymere Polyamid 6, Polyamid 6.6, Polyethylenterephthalat oder Polybutylenterephthalat sind und die Wirkkomponenten 2-Hydroxy-benzophenone oder sterisch gehinderte Amine oder Benzimidazole oder sterisch gehinderte Phenole oder Polyethylenglykole oder halogenierte, hydroxylgruppenhaltige Diphenylether sind.

11. Kunststoff-Filamente, -Formkörper oder -Folien nach Anspruch 10, **dadurch gekennzeichnet, daß** die Migrationselemente aliphatische Fettalkylsäure-Derivate, bevorzugt Derivate der Ölsäure, der 10-Undecensäure oder der Erucasäure, sind.

12. Kunststoff-Filamente, -Formkörper oder -Folien nach Anspruch 10, **dadurch gekennzeichnet, daß** die Ankersegmente für Polyamid 6 gekoppelte Monomereinheiten von ε-Aminocapronsäure, für Polyamid 6.6 Oligomere aus Hexamethylendiamin und Adipinsäure, für Polyethylenterephthalat Oligomere aus Terephthalsäure und Ethylenglykol und für Polybutylenterephthalat Oligomere aus Terephthalsäure und 1,4-Butylenglykol sind.

13. Kunststoff-Filamente, -Formkörper oder -Folien nach Anspruch 12, **dadurch gekennzeichnet, daß** die Kopplung der Migrationselemente_mit den Ankersegmenten durch Umsetzung der 2-Oxazolinderivate der Fettalkylsäuren mit den freien Carboxyl-, Hydroxyl- oder Aminogruppen der oligomeren Ankersegmente erfolgt.

## Claims

1. Process for durable light, thermal-oxidative, antibacterial, hydrophobic and/or hydrophilic stabilization of melt-formable polymers from the group nylon-6, nylon-6,6, polyethylene terephthalate and polybutylene terephthalate by adding an additive prior to the processing operation on the polymers, **characterized in that** the polymers are mixed with an additive which contains active stabilizing components chemically coupled to migration elements incompatible with these polyamide or polyester polymers and to oligomeric anchoring segments having affinity for the polymer concerned, wherein the active components are 2-hydroxybenzophenones or sterically hindered amines or benzimidazoles or sterically hindered phenols or polyethylene glycols or halogenated hydroxyl-containing diphenyl ethers.

2. Process according to Claim 1, **characterized in that** the migration elements are aliphatic fatty alkyl acid derivatives, preferably derivatives of oleic acid, of 10-undecenoic acid or of erucic acid.

3. Process according to either or both of Claims 1 and 2, **characterized in that** the 2-hydroxybenzophenones have at least one additional free reactive functional hydroxyl group, the benzimidazoles or the halogenated hydroxyl-containing diphenyl ethers each have at least one free reactive hydroxyl group, and the sterically hindered amines have free reactive functional hydroxyl or amino groups.

4. Process according to one or more of Claims 1 to 3, **characterized in that** the migration elements are derivatives of oleic acid, erucic acid or 10-undecenoic acid.

5. Process according to one or more of Claims 1 to 4, **characterized in that** the anchoring segments employed are oligomers derived from ε-aminocaproic acid or oligomers derived from hexamethylenediamine and adipic acid.

6. Process according to Claim 1 or 2 or 3 or 4, **characterized in that** the anchoring segments employed are oligomers derived from terephthalic acid or dimethyl terephthalate and ethylene glycol or oligomers derived from terephthalic acid or dimethyl terephthalate and 1,4-butylene glycol.

7. Process according to one or more of Claims 2 and 4 to 6, **characterized in that** the coupling of the migration elements to the anchoring segments is effected by reaction of 2-oxazoline derivatives of the fatty alkyl acids with free carboxyl, hydroxyl or amino groups of the oligomeric anchoring segments.

8. Process according to one or more of Claims 1 to 7, **characterized in that** the coupling of the active components to the migration element(s) is effected via the reaction of free hydroxyl or amino groups of the actives with epoxidated olefinic bonds of the fatty alkyl acid.

9. Process according to one or more of Claims 1 to 8, **characterized in that** the additive is admixed in a proportion of up to 5 wt%, preferably up to 1 wt%, based on the weight of the polymers.

10. Plastic filaments, mouldings or sheetings comprising melt-formable polymers containing an additive endowing them with durable light stability, thermal-oxidative, antibacterial, hydrophobic and/or hydrophilic stability, **characterized in that** active components in the additive are coupled to migration elements incompatible with polymer and anchoring segments having affinity for polymer so that they accumulate in a near-surface layer of the plastic filaments, mouldings or sheetings, wherein the polymers are nylon-6, nylon-6,6, polyethylene terephthalate or polybutylene terephthalate and the active components are 2-hydroxybenzophenones or sterically hindered amines or benzimidazoles or sterically hindered phenols or polyethylene glycols or halogenated hydroxyl-containing diphenyl ethers.

11. Plastic filaments, mouldings or sheetings according to Claim 10, **characterized in that** the migration elements are aliphatic fatty alkyl acid derivatives, preferably derivatives of oleic acid, of 10-undecenoic acid or of erucic acid.

12. Plastic filaments, mouldings or sheetings according to Claim 10, **characterized in that** the anchoring segments are coupled monomeric units of ε-aminocaproic acid for nylon-6, oligomers derived from hexamethylenediamine and adipic acid for nylon-6,6, oligomers derived from terephthalic acid and ethylene glycol for polyethylene terephthalate and oligomers derived from terephthalic acid and 1,4-butylene glycol for polybutylene terephthalate.

13. Plastic filaments, mouldings or sheetings according to Claim 12, **characterized in that** the coupling of the migration elements to the anchoring segments is effected by reaction of 2-oxazoline derivatives of the fatty alkyl acids with free carboxyl, hydroxyl or amino groups of the oligomeric anchoring segments.

## Revendications

1. Procédé de stabilisation permanente à l'oxydation par la lumière, à l'oxydation par la chaleur, ainsi qu'en matière antibactérienne, hydrophobe et/ou hydrophile de polymères façonnables à partir de la masse fondue, lesquels polymères sont choisis dans le groupe formé du Polyamide 6, du Polyamide 6.6, du poly(téréphtalate d'éthylène) et du poly(téréphtalate de butylène), par addition d'un additif avant le processus de façonnage des polymères, **caractérisé en ce que** les polymères sont mélangés à un additif qui contient des composants actifs stabilisateurs qui sont chimiquement couplés à des éléments de migration polymères-incompatibles pour ces polyamides ou ces polyesters et à des segments d'ancrage oligomères polymères-affins pour le polymère concerné, dans lequel les composants actifs sont des 2-hydroxy-benzophénones ou des amines ou des benzimidazoles à empêchement stérique ou des phénols ou des polyéthylèneglycols à empêchement stérique ou des diphényléthers halogénés contenant des groupements hydroxyle.

2. Procédé selon la revendication 1, **caractérisé en ce que** les éléments de migration sont des dérivés aliphatiques d'acides alkyliques gras, de préférence des dérivés de l'acide oléique, de l'acide 10-undécénique ou de l'acide érucique.

3. Procédé selon au moins l'une quelconque des revendications 1 à 2, **caractérisé en ce que** les 2-hydroxy-benzophénones disposent d'un groupement hydroxy fonctionnel réactif libre supplémentaire, les benzimidazoles ou les diphényléthers halogénés comprenant des groupements hydroxy respectivement d'au moins un groupement hydroxy réactionnel libre et les amines à empêchement stérique de groupements hydroxy ou amino fonctionnels réactionnels libres.

4. Procédé selon au moins l'une quelconque des revendications 1 à 3, **caractérisé en ce que** les éléments de migration sont des dérivés de l'acide oléique, de l'acide érucique ou de l'acide 10-undécénique.

5. Procédé selon au moins l'une quelconque des revendications 1 à 4, **caractérisé en ce que** l'on utilise comme segments d'ancrage des oligomères formés à partir d'acide ε-amino caproïque ou des oligomères formés à partir d'hexaméthylènediamine et d'acide adipique.

6. Procédé selon les revendications 1 à 4, **caractérisé en ce que** l'on utilise comme segments d'ancrage des oligomères formés à partir de l'acide téréphtalique ou du téréphtalate de diméthyle et d'éthylèneglycol ou des oligomères formés à partir d'acide téréphtalique ou de téréphtalate de diméthyle et de 1,4-butylèneglycol.

7. Procédé selon au moins l'une quelconque des revendications 2 et 4 à 6, **caractérisé en ce que** le couplage des éléments de migration avec les segments d'ancrage se fait par réaction de dérivés de 2-oxazoline des acides alkyliques gras avec des groupements carboxyle, hydroxyle ou amino libres des segments d'ancrage oligomères.

8. Procédé selon au moins l'une quelconque des revendications 1 à 7, **caractérisé en ce que** le couplage des composants actifs sur le ou les éléments de migration se fait par réaction de groupements hydroxyle ou amino libres des composants actifs avec des liaisons oléfiniques époxydées de l'acide alkylique gras.

9. Procédé selon au moins l'une quelconque des revendications 1 à 8, **caractérisé en ce que** l'additif est ajouté en proportion allant jusqu' à 5 % en poids, de préférence jusqu'à 1 % en poids, par rapport au poids des polymères.

10. Filaments, corps moulés ou films de matière plastique formés de polymères façonnables dans la masse fondue, qui contiennent un additif, qui leur confère une stabilité à la lumière, ainsi qu'une stabilité thermo-oxydative, antibactérienne, hydrophobe et/ou hydrophile permanentes, **caractérisés en ce que**, dans l'additif, des composants actifs sont couplés avec des éléments de migration polymères-incompatibles et des segments d'ancrage polymères-affins, de sorte qu'ils se concentrent dans une couche proche de la surface des filaments, des corps moulés ou des films de matière plastique, dans lequel les polymères sont le Polyamide 6, le Polyamide 6.6, le poly(téréphtalate d'éthylène) ou le poly(téréphtalate de butylène) et les composants actifs sont des 2-hydroxy-benzophénones ou des amines ou des benzimidazoles à empêchement stérique ou encore des phénols ou des polyéthylèneglycols à empêchement stérique ou des diphényléthers halogénés contenant des groupements hydroxyle.

11. Filaments, corps moulés ou films de matière plastique selon la revendication 10, **caractérisés en ce que** les éléments de migration sont des dérivés d'acides alkyliques gras aliphatiques, de préférence des dérivés de l'acide oléique, de l'acide 10-undécénique ou de l'acide érucique.

12. Filaments, corps moulés ou films de matière plastique selon la revendication 10, **caractérisés en ce que** les segments d'ancrage pour le Polyamide 6 sont des unités monomères couplées d'acide ε-aminocaproïque, pour le Polyamide 6.6, des oligomères formés à partir d'hexaméthylènediamine et d'acide adipique, pour le poly(téréphtalate d'éthylène), des oligomères formés à partir d'acide téréphtalique et d'éthylèneglycol et pour le poly(téréphtalate de butylène), des oligomères formés à partir d'acide téréphtalique et de 1,4-butylèneglycol.

13. Filaments, corps moulés ou films de matière plastique selon la revendication 12, **caractérisés en ce que** le couplage des éléments de migration avec les segments d'ancrage se fait par réaction des dérivés de 2-oxazoline des acides alkyliques gras avec les groupements carboxyle, hydroxyle ou amino libres des segments d'ancrage oligomères.
